# EUROPEAN PATENT APPLICATION

(11) **EP 4 815 169 A1**
(43) Date of publication of application: **30.09.2026**
(21) Application number: 24892989.5
(22) Date of filing: 09.09.2024
(51) Int. Cl.: H01M 50/503, H01M 50/186, H01M 50/375, H01M 10/653, H01M 4/66

(54) **CASING, CELL, AND ELECTRIC DEVICE**

(30) Priority: 24.11.2023 CN 202311578615
(71) Applicant: Ningde Amperex Technology Limited, Ningde, Fujian 352100 (CN)
(72) Inventor: ZHENG, Xingfang, Ningde, Fujian 352100 (CN); ZHANG, Guowen, Ningde, Fujian 352100 (CN); CHEN, Minjing, Ningde, Fujian 352100 (CN); ZHU, Aosheng, Ningde, Fujian 352100 (CN)
(74) Representative: Dehns Germany Partnerschaft mbB
(86) International application number: PCT/CN2024/117825
(87) International publication number: WO 2025/107830

(57) **Abstract**

A housing (20), a battery cell (100), and an electric device are provided. The housing (20) includes a shell (21) and a pressure relief assembly (23). The shell (21) has a pressure relief hole (211). The pressure relief assembly (23) is configured to block the pressure relief hole (211), and the pressure relief assembly (23) includes an adhesive layer (231), where the adhesive layer (231) is adhered to the shell (21), and the adhesive layer (231) is configured to lose adhesion when a temperature inside the shell (21) reaches a threshold temperature, so as to open the pressure relief hole to release pressure inside the shell (21). An adhesion area of the adhesive layer (231) is S, 2 mm²≤S≤10 mm². When the adhesive layer (231) of the pressure relief assembly (23) loses adhesion upon heating, the pressure relief hole (211) is opened. This design gives the pressure relief assembly (23) good thermal sensitivity and high pressure relief reliability, which can improve the safety of the battery cell having the housing (20) and eliminate the need to reserve a large space for the pressure relief assembly (23), thus fully utilizing the space of the electric device. The range of 2 mm²≤S≤10 mm² can ensure that the adhesive layer (231) keeps the pressure relief assembly (23) effectively blocking the pressure relief hole (211) when the housing (20) is in a normal operating state, and can also make the adhesive layer (231) lose adhesion promptly when the pressure and temperature inside the housing (20) are abnormal, thereby releasing pressure in a timely manner.

## Description

### CROSS-REFERENCE TO RELATED APPLICATIONS

The present application claims priority to Chinese Patent Application No. 2023115786158, filed on November 24, 2023 and entitled "HOUSING, BATTERY CELL, AND ELECTRIC DEVICE", which is incorporated herein by reference in its entirety.

### TECHNICAL FIELD

The present application relates to the field of battery technologies, and specifically, to a housing, a battery cell, and an electric device.

### BACKGROUND

With the rapid development of new energy technology, battery cells have been widely used in fields such as electronic devices, electric automobiles, electric two-wheeled vehicles, and electric tools. The requirements for the safety performance of battery cells are also increasingly high.

### SUMMARY

Some embodiments of the present application provide a housing, a battery cell, and an electric device, improving the safety performance of the battery cell.

According to a first aspect, an embodiment of the present application provides a housing. The housing includes a shell and a pressure relief assembly. The shell has a pressure relief hole. The pressure relief assembly is configured to block the pressure relief hole, the pressure relief assembly includes an adhesive layer, where the adhesive layer is adhered to the shell, and the pressure relief assembly is configured to lose adhesion upon heating when a temperature inside the shell reaches a threshold temperature, so as to open the pressure relief hole to release pressure inside the shell, where the threshold temperature is between 110° and 130°. An adhesion area of the adhesive layer is S, 2 mm²≤S≤10 mm².

In the above technical solution, the pressure relief hole is opened when the adhesive layer of the pressure relief assembly loses adhesion upon heating, which can release pressure inside the housing and reduce the risk of safety issues such as explosion or fire in the shell, thus improving the safety performance of the battery cell having the housing. The pressure relief hole is opened when the adhesive layer of the pressure relief assembly loses adhesion upon heating. This design gives the pressure relief assembly good thermal sensitivity and high pressure relief reliability, which can improve the safety of the battery cell having the housing. Moreover, compared to the pressure relief method using score grooves, this solution does not require reserving a large space for the pressure relief assembly, fully utilizing the space of the electric device, improving the space utilization rate of the electric device, making the structure of the electric device more compact, and lowering the cost of preparing the pressure relief assembly. The pressure relief hole is opened when the adhesive layer of the pressure relief assembly loses adhesion upon heating, which releases the pressure inside the housing and also helps increase the hot box pass rate of the battery cell having the housing. The threshold temperature is a preset temperature for pressure relief. When the range of the threshold temperature meets 110°C to 130°C, pressure relief can be performed within an appropriate temperature range. When the threshold temperature is in a range higher than 130°C, pressure relief failure is prone to occur. When the threshold temperature is in a range lower than 110°C, electrolyte leakage may occur. Both of the two conditions cannot achieve the ideal pressure relief effect, leading to deterioration of the cycle performance and hot box pass rate of the battery cell. When the adhesion area S of the adhesive layer meets 2 mm²≤S≤10 mm², the housing has good adhesion capability when in a normal operating state. This can ensure that the adhesive layer keeps the pressure relief assembly effectively blocking the pressure relief hole, thereby ensuring normal operation of the battery cell having the housing, and can also make the adhesive layer lose adhesion promptly when the pressure and temperature inside the housing are abnormal, thereby allowing the pressure relief assembly to open the pressure relief hole and release pressure in a timely manner, thus improving the safety performance of the battery cell having the housing.

In some embodiments of the first aspect of the present application, 3 mm²≤S≤8 mm².

In the above technical solution, when the adhesion area S of the adhesive layer meets 3 mm²≤S≤8 mm², the housing has better adhesion capability when in a normal operating state. This can ensure that the adhesive layer keeps the pressure relief assembly effectively blocking the pressure relief hole, thereby ensuring normal operation of the battery cell having the housing, and can also make the adhesive layer lose adhesion promptly when the pressure and temperature inside the housing are abnormal, thereby allowing the pressure relief assembly to open the pressure relief hole and release pressure in a timely manner, thus improving the safety performance of the battery cell having the housing.

In some embodiments of the first aspect of the present application, the adhesive layer includes a polymer.

In the above technical solution, the adhesive layer includes a polymer, and can play a role of high adhesion performance under normal operating conditions, thereby enabling the pressure relief assembly to achieve a sealing function; under high temperature operating conditions, the adhesive layer can quickly lose adhesion, causing the pressure relief assembly to open the pressure relief hole, exposing the pressure relief hole, forming a pressure relief channel, and achieving timely pressure relief function.

In some embodiments of the first aspect of the present application, a material of the polymer includes at least one of ethylene, propylene, vinylidene fluoride, acrylic acid, acrylate, styrene, acrylonitrile, maleic anhydride, vinyl chloride, or chloroprene.

In the above technical solution, the above materials both facilitate the adhesive layer to play a role of high adhesion performance under normal operating conditions, thereby enabling the pressure relief assembly to achieve a sealing function; and also facilitate the adhesive layer to quickly lose adhesion under high temperature operating conditions, causing the pressure relief assembly to open the pressure relief hole, exposing the pressure relief hole, forming a pressure relief channel, and achieving timely pressure relief function.

In some embodiments of the first aspect of the present application, a mass proportion of the polymer is 70% to 95%.

In the above technical solution, the mass proportion of the polymer is 70% to 95%, which facilitates the adhesive layer playing a role of high adhesion performance under normal operating conditions, thereby enabling the pressure relief assembly to achieve a sealing function; and also facilitates the adhesive layer quickly losing adhesion under high temperature operating conditions, causing the pressure relief assembly to open the pressure relief hole, exposing the pressure relief hole, forming a pressure relief channel, and achieving timely pressure relief function.

In some embodiments of the first aspect of the present application, a melting point of the polymer is A, 70°C≤A≤100°C.

In the above technical solution, when the melting point of the polymer is A, 70°C≤A≤100°C, the adhesive layer loses adhesion before issues such as explosion or fire occur in the housing, thereby allowing the pressure relief assembly to open the pressure relief hole to release pressure inside the shell, reducing the risk of issues such as explosion or fire in the battery cell having the housing, thus facilitating improvement of the safety performance of the battery cell.

In some embodiments of the first aspect of the present application, a volume distribution particle size Dv90 of the polymer is 2.5 µm to 4.5 µm, and/or a weight average molecular weight of the polymer is K, 15w≤K≤25w.

In the above technical solution, the volume distribution particle size Dv90 of the polymer is 2.5 µm to 4.5 µm, which facilitates the adhesive layer having good adhesion performance. The weight average molecular weight K of the polymer is 15w≤K≤25w, which facilitates the adhesive layer having good adhesion performance and mechanical performance, and can also reduce the manufacturing difficulty of the adhesive layer, where w denotes ten thousand, and 15w denotes 150000.

In some embodiments of the first aspect of the present application, an adhesion force of the adhesive layer is F, 10 N/m≤F≤40 N/m.

In the above technical solution, the range of 10 N/m≤F≤40 N/m facilitates the adhesive layer playing a role of high adhesion performance under normal operating conditions, thereby enabling the pressure relief assembly to achieve a sealing function, and also facilitates the adhesive layer quickly losing adhesion under high temperature operating conditions, causing the pressure relief assembly to open the pressure relief hole, exposing the pressure relief hole, forming a pressure relief channel, and achieving timely pressure relief function.

In some embodiments of the first aspect of the present application, the pressure relief assembly further includes a diaphragm, where the diaphragm covers the pressure relief hole, and the adhesive layer for connecting the shell is provided on a surface of the diaphragm facing the shell.

In the above technical solution, by covering the pressure relief hole with the diaphragm, a sealing role can be achieved. The surface of the diaphragm facing the shell is provided with the adhesive layer, and the diaphragm is adhered to the shell via the adhesive layer, making the connection method simple and convenient. When the adhesive layer loses adhesion upon heating, the diaphragm is easily separated from the shell, thereby allowing the diaphragm to open the pressure relief hole to release pressure, achieving timely pressure relief, and improving the safety performance of the battery cell having the housing. Covering the pressure relief hole with the diaphragm simplifies the structure of the pressure relief assembly and reduces the manufacturing cost.

In some embodiments of the first aspect of the present application, the pressure relief assembly further includes a first metal sheet and a diaphragm, where the diaphragm is disposed between the first metal sheet and the shell, the diaphragm is connected to the shell via the adhesive layer, an adhesive layer for connecting the first metal sheet is provided on a surface of the diaphragm facing away from the shell, and the first metal sheet covers the pressure relief hole.

In the above technical solution, the first metal sheet covers the pressure relief hole, which contributes to improving the sealing performance of the pressure relief assembly under normal operating conditions. The surface of the diaphragm facing the first metal sheet is provided with the adhesive layer, and the diaphragm is adhered to the first metal sheet via the adhesive layer, making the connection method simple. When the adhesive layer loses adhesion upon heating, the first metal sheet is easily separated from the diaphragm, thereby allowing the first metal sheet to open the pressure relief hole to release pressure, achieving timely pressure relief, and improving the safety performance of the battery cell having the housing.

In some embodiments of the first aspect of the present application, a thickness of the first metal sheet is h₁, 0.03 mm≤h₁≤1.00 mm.

In the above technical solution, the range of 0.03 mm≤h₁≤1.00 mm makes the first metal sheet have good strength, which contributes to improving the sealing performance, and can also minimize the space occupied by the first metal sheet as much as possible, making the structure of the battery cell having the housing more compact.

In some embodiments of the first aspect of the present application, 0.03 mm≤h₁≤0.15 mm.

In the above technical solution, the range of 0.03 mm≤h₁≤0.15 mm makes the first metal sheet have better strength, which contributes to improving the sealing performance, and can also make the space occupied by the first metal sheet smaller, making the structure of the battery cell having the housing more compact.

In some embodiments of the first aspect of the present application, a thermal conductivity of the first metal sheet is P₁, 10 W/(m*K) ≤P₁≤500 W/(m*K).

In the above technical solution, the thermal conductivity of the first metal sheet is P₁, 10 W/(m*K) ≤P₁≤500 W/(m*K), which contributes to transferring heat through the first metal sheet to the adhesive layer, so that the adhesive layer between the first metal sheet and the diaphragm can lose adhesion promptly, reducing the risk of safety hazards such as explosion or fire in the housing, thus improving the safety performance of the battery cell having the housing.

In some embodiments of the first aspect of the present application, 80 W/(m*K) ≤P₁≤420 W/(m*K).

In the above technical solution, the range of 80 W/(m*K) ≤P₁≤420 W/(m*K) makes the first metal sheet more sensitive to temperature, enabling more timely transfer of heat to the adhesive layer between the diaphragm and the first metal sheet, so that the adhesive layer between the first metal sheet and the diaphragm can lose adhesion promptly, reducing the risk of safety hazards such as explosion or fire in the housing, thus improving the safety performance of the battery cell having the housing.

In some embodiments of the first aspect of the present application, the pressure relief assembly further includes a second metal sheet, where the second metal sheet is provided with a second through hole, the second metal sheet is connected between the diaphragm and the shell, the second through hole communicates with the pressure relief hole, the adhesive layer for adhering to the second metal sheet is provided on a surface of the diaphragm facing away from the first metal sheet, and the second metal sheet is connected to an outer surface of the housing.

In the above technical solution, the second metal sheet is adhered via the adhesive layer disposed on a side of the diaphragm facing away from the first metal sheet, making the connection simpler and more convenient and making the metal sheet have good thermal conductivity. The provision of the second metal sheet facilitates rapid transfer of heat inside the housing to the adhesive layer between the diaphragm and the second metal sheet, so that the adhesive layer can lose adhesion promptly, thereby making the pressure relief sensitivity of the pressure relief assembly better, reducing the risk of safety hazards such as explosion or fire in the housing, thus improving the safety performance of the battery cell having the housing.

In some embodiments of the first aspect of the present application, the diaphragm is provided with a first through hole, where the first through hole communicates with the pressure relief hole.

In the above technical solution, the diaphragm is provided with the first through hole communicating with the pressure relief hole, reducing the risk of the diaphragm blocking the discharge of gas pressure inside the shell, and improving the pressure relief efficiency of the pressure relief assembly.

In some embodiments of the first aspect of the present application, the pressure relief assembly further includes a second metal sheet and a diaphragm, where the second metal sheet is provided with a second through hole, the second metal sheet is disposed between the diaphragm and the shell, the second metal sheet is connected to the shell, the second through hole communicates with the pressure relief hole, the adhesive layer for connecting the second metal sheet is provided on a surface of the diaphragm facing the shell, and the diaphragm covers the second through hole.

In the above technical solution, the second metal sheet is connected to the shell, a side of the second metal sheet facing away from the shell is connected to the diaphragm via the adhesive layer, making the connection simpler and more convenient and making the metal sheet have good thermal conductivity. The provision of the second metal sheet facilitates rapid transfer of heat inside the housing to the adhesive layer between the diaphragm and the second metal sheet, so that the adhesive layer can lose adhesion promptly, thereby making the pressure relief sensitivity of the pressure relief assembly better, reducing the risk of safety hazards such as explosion or fire in the housing, thus improving the safety performance of the battery cell having the housing. By covering the second through hole with the diaphragm, a sealing role can be achieved under normal operating conditions, the surface of the diaphragm facing the shell is provided with the adhesive layer, and the diaphragm is adhered to the second metal sheet via the adhesive layer, making the connection simpler and more convenient. The good thermal conductivity of the second metal sheet enables the adhesive layer to lose adhesion upon heating, the diaphragm is easily separated from the second metal sheet, thereby allowing the diaphragm to open the second through hole, further opening the pressure relief hole to release pressure, achieving timely pressure relief, and improving the safety performance of the battery cell having the housing.

In some embodiments of the first aspect of the present application, a thermal conductivity of the second metal sheet is P₂, 10 W/(m*K) ≤P₂≤500 W/(m*K).

In the above technical solution, the thermal conductivity of the second metal sheet is P₂, 10 W/(m*K) ≤P₂≤500 W/(m*K), which contributes to transferring heat inside the shell through the second metal sheet to the adhesive layer, so that the adhesive layer between the second metal sheet and the diaphragm can lose adhesion promptly, reducing the risk of safety hazards such as explosion or fire in the housing, thus improving the safety performance of the battery cell having the housing.

In some embodiments of the first aspect of the present application, 80 W/(m*K) ≤P₂≤420 W/(m*K).

In the above technical solution, the range of 80 W/(m*K) ≤P₂≤420 W/(m*K) makes the second metal sheet more sensitive to temperature, enabling more timely transfer of heat to the adhesive layer between the diaphragm and the second metal sheet, so that the adhesive layer between the second metal sheet and the diaphragm can lose adhesion promptly, reducing the risk of safety hazards such as explosion or fire in the housing, thus improving the safety performance of the battery cell having the housing.

In some embodiments of the first aspect of the present application, the housing meets at least one of the following conditions: Condition A: a thickness of the second metal sheet is h₂, 0.03 mm≤h₂≤1 mm; or Condition B: a diameter of the second through hole is D₁, 0.1 mm≤D₁≤4 mm.

In the above technical solution, the range of 0.03 mm≤h₂≤1 mm makes the second metal sheet have good strength, which contributes to improving the sealing performance, and can also minimize the space occupied by the second metal sheet as much as possible, making the structure of the battery cell having the housing more compact. The diameter of the second through hole is D₁, 0.1 mm≤D₁≤4 mm, which ensures a larger connection area between the second metal sheet and the diaphragm and between the second metal sheet and the shell, improves connection stability, and can also reduce the risk of the second metal sheet blocking the pressure relief hole. After the adhesive layer loses adhesion, this enables the pressure relief hole to release pressure in a timely and efficient manner, thus improving the safety performance of the battery cell having the housing.

In some embodiments of the first aspect of the present application, the pressure relief hole is an electrolyte injection hole.

In the above technical solution, the pressure relief hole can both release pressure after the adhesive layer loses adhesion upon heating and be used for injecting electrolyte into the interior of the shell during the assembly process of the battery cell, one hole with multiple uses, which can simplify the structure of the housing, thereby simplifying the preparation process of the battery cell having the housing, and reducing the preparation cost of the battery cell.

In some embodiments of the first aspect of the present application, a material of the first metal sheet is one or more of nickel, aluminum, or stainless steel.

In some embodiments of the first aspect of the present application, a material of the second metal sheet is one or more of nickel, aluminum, or stainless steel.

Selecting the above materials contributes to transferring heat inside the shell through the second metal sheet to the adhesive layer, so that the adhesive layer between the second metal sheet and the diaphragm can lose adhesion promptly, reducing the risk of safety hazards such as explosion or fire in the housing, thus improving the safety performance of the battery cell having the housing.

According to a second aspect, an embodiment of the present application provides a battery cell, including an electrode assembly and the housing provided in any of the above embodiments.

In the above technical solution, the pressure relief hole of the housing is opened when the adhesive layer of the pressure relief assembly loses adhesion upon heating, which can release pressure inside the housing and reduce the risk of safety hazards such as explosion or fire in the shell, thus improving the safety performance of the battery cell having the housing. The pressure relief hole is opened when the adhesive layer of the pressure relief assembly loses adhesion upon heating. This design gives the pressure relief assembly good thermal sensitivity and high pressure relief reliability, which can improve the safety of the battery cell having the housing. Moreover, compared to the pressure relief method using score grooves, this solution does not require reserving a large space for the pressure relief assembly, fully utilizing the space of the electric device powered by the battery cell, improving the space utilization rate of the electric device, making the structure of the electric device more compact, and lowering the cost of preparing the pressure relief assembly.

According to a third aspect, an embodiment of the present application provides an electric device, where the electric device includes the battery cell provided in the above embodiments.

In the above technical solution, the above battery cell has good safety performance, which can improve the power consumption safety and power consumption stability of the electric device powered by the battery cell. The battery cell in the above embodiments does not require reserving a large space for the pressure relief assembly, enabling full utilization of the space of the electric device, improving the space utilization rate of the electric device, and making the structure of the electric device more compact.

### BRIEF DESCRIPTION OF DRAWINGS

To more clearly illustrate the technical solutions of some embodiments of the present application, the accompanying drawings required for use in these embodiments are briefly introduced below. It should be understood that the following drawings only show certain embodiments of the present application and therefore should not be regarded as limiting the scope. For those of ordinary skill in the art, other related drawings can be obtained based on these drawings without creative effort.
FIG. 1 is a schematic structural diagram of a battery cell according to some embodiments of the present application;
FIG. 2 is an exploded view of the battery cell in FIG. 1;
FIG. 3 is a schematic structural diagram of a battery cell from another perspective according to some embodiments of the present application;
FIG. 4 is a cross-sectional view along direction Q1-Q1 in FIG. 3.
FIG. 5 is an enlarged view at E1 in FIG. 4;
FIG. 6 is a schematic structural diagram of a battery cell according to some other embodiments of the present application;
FIG. 7 is an exploded view of the battery cell in FIG. 6;
FIG. 8 is a schematic structural diagram of a battery cell from another perspective according to some other embodiments of the present application;
FIG. 9 is a cross-sectional view along direction Q2-Q2 in FIG. 8;
FIG. 10 is an enlarged view at E2 in FIG. 9;
FIG. 11 is a schematic structural diagram of a battery cell according to further some embodiments of the present application;
FIG. 12 is an exploded view of the battery cell in FIG. 11;
FIG. 13 is a schematic structural diagram of a battery cell from another perspective according to further some embodiments of the present application;
FIG. 14 is a cross-sectional view along direction Q3-Q3 in FIG. 13;
FIG. 15 is an enlarged view at E3 in FIG. 14;
FIG. 16 is a schematic structural diagram of a battery cell according to still some other embodiments of the present application;
FIG. 17 is a cross-sectional view along direction Q4-Q4 in FIG. 16; and
FIG. 18 is an enlarged view at E4 in FIG. 17.

Reference signs: 100. battery cell; 10. electrode assembly; 20. housing; 20a. accommodation space; 21. shell; 211. pressure relief hole; 22. terminal post; 23. pressure relief assembly; 231. adhesive layer; 232. diaphragm; 2321. first through hole; 233. first metal sheet; 234. second metal sheet; and 2341. second through hole.

### DESCRIPTION OF EMBODIMENTS

To make the objectives, technical solutions, and advantages of some embodiments of the present application clearer, the technical solutions in these embodiments of the present application will be clearly and completely described below in conjunction with the accompanying drawings in these embodiments of the present application. It is apparent that the described embodiments are some of these embodiments of the present application, rather than all embodiments. The components of these embodiments of the present application generally described and shown in the accompanying drawings herein may be arranged and designed in various different configurations.

Therefore, the detailed description of some embodiments of the present application provided in the accompanying drawings below is not intended to limit the scope of the present application as claimed, but merely represents selected embodiments of the present application. Based on these embodiments in the present application, all other embodiments obtained by those of ordinary skill in the art without creative effort fall within the protection scope of the present application.

It should be noted that some embodiments and features in these embodiments of the present application may be combined with each other without conflict.

It should be noted that similar reference signs and letters denote similar items in the following drawings; therefore, once an item is defined in one drawing, it does not need to be further defined or explained in subsequent drawings.

In the description of some embodiments of the present application, it should be noted that the indicated orientations or positional relationships are based on the orientations or positional relationships shown in the accompanying drawings, or the orientations or positional relationships that the product of the present application is usually placed in during use, or the orientations or positional relationships commonly understood by those skilled in the art, and are only for the convenience of describing the present application and simplifying the description, rather than indicating or implying that the referred device or element must have a specific orientation, be constructed or operated in a specific orientation, and therefore should not be construed as limiting the present application. In addition, the terms "first," "second," "third," and the like are only used for distinguishing descriptions and should not be understood as indicating or implying relative importance.

Currently, from the perspective of market development, the application of batteries is becoming increasingly widespread. Batteries are widely used in electric transportation means such as electric bicycles, electric motorcycles, and electric automobiles, as well as electric tools, drones, energy storage devices, and other fields. With the continuous expansion of battery application fields, the market demand for batteries is also constantly increasing.

Currently, to improve safety, battery cells with hard shell have score grooves created on the shell by laser to facilitate pressure relief when the internal gas pressure of the battery cell becomes excessive. Electric apparatuses equipped with battery cells having hard shell need to reserve a relatively large valveopening space corresponding to the score grooves, resulting in a larger overall space occupied by the electric device. Additionally, the thermal sensitivity of score grooves is poor, leading to low pressure relief reliability, which affects the safety of the battery cell. Laser scoring also increases the preparation cost of the battery cell and leads to a low hot box pass rate for the battery cell.

Based on the above considerations, to improve the safety performance and pressure relief reliability of the battery cell, an embodiment of the present application provides a housing including a shell and a pressure relief assembly. The shell has a pressure relief hole. The pressure relief assembly is configured to block the pressure relief hole, the pressure relief assembly includes an adhesive layer adhered to the shell, and the pressure relief assembly is such configured that the adhesive layer is configured to lose adhesion upon heating when the temperature inside the shell reaches a threshold temperature, so as to open the pressure relief hole to release pressure inside the shell, and the threshold temperature is between 110° and 130°. An adhesion area of the adhesive layer is S, 2 mm²≤S≤10 mm².

The pressure relief hole is opened when the adhesive layer of the pressure relief assembly loses adhesion upon heating, which can release pressure inside the housing and reduce the risk of safety hazards such as explosion or fire in the shell, thus improving the safety performance of the battery cell having the housing.

The pressure relief hole is opened when the adhesive layer of the pressure relief assembly loses adhesion upon heating. This design gives the pressure relief assembly good thermal sensitivity and high pressure relief reliability, which can improve the safety of the battery cell having the housing. Moreover, compared to the pressure relief method using score grooves, this solution does not require reserving a large space for the pressure relief assembly, fully utilizing the space of the electric device, improving the space utilization rate of the electric device, making the structure of the electric device more compact, and lowering the cost of preparing the pressure relief assembly.

The pressure relief hole is opened when the adhesive layer of the pressure relief assembly loses adhesion upon heating, which releases the pressure inside the housing and also helps increase the hot box pass rate of the battery cell having the housing.

When the adhesion area S of the adhesive layer meets 2 mm²≤S≤10 mm², the housing has good adhesion capability when in a normal operating state. This can ensure that the adhesive layer keeps the pressure relief assembly effectively blocking the pressure relief hole, thereby ensuring normal operation of the battery cell having the housing, and can also make the adhesive layer lose adhesion promptly when the pressure and temperature inside the housing are abnormal, thereby allowing the pressure relief assembly to open the pressure relief hole and release pressure in a timely manner, thus improving the safety performance of the battery cell having the housing.

The battery cell disclosed in some embodiments of the present application can be used, but is not limited to, in electric devices such as electric two-wheeled vehicles, electric tools, drones, and energy storage devices. The battery cell with the operating conditions of the present application can also be used as the power system of the electric device, which helps improve the safety performance of the battery cell.

An embodiment of the present application provides an electric device using a battery cell as a power source, where the electric device may include, but is not limited to, an electronic device, an electric tool, an electric transportation means, a drone, and an energy storage device. The electronic device may include a mobile phone, a tablet, a laptop, or the like, the electric tool may include an electric drill, an electric saw, or the like, and the electric transportation means may include an electric automobile, an electric motorcycle, an electric bicycle, or the like.

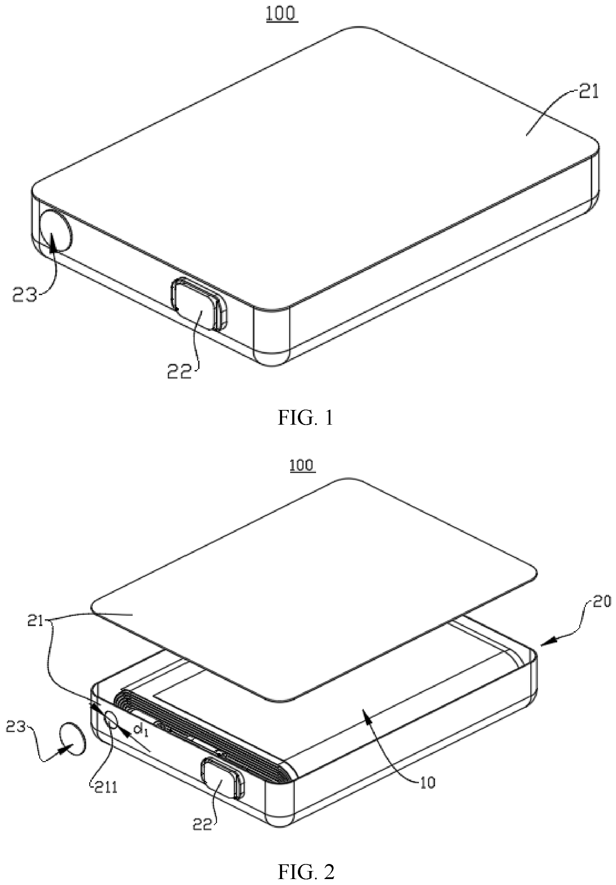

As shown in FIG. 1 and FIG. 2, an embodiment of the present application provides a battery cell 100, where the battery cell 100 includes an electrode assembly 10 and a housing 20. The housing 20 forms an accommodation space 20a, and the electrode assembly 10 is accommodated within the accommodation space 20a. The accommodation space 20a may also accommodate an electrolyte, such as an electrolyte.

The electrode assembly 10 includes a positive electrode plate, a negative electrode plate, and a separator, where the separator is disposed between the positive electrode plate and the negative electrode plate to insulate and separate the positive electrode plate from the negative electrode plate.

The positive electrode plate includes a positive electrode current collector and a positive electrode active material layer, where the positive electrode active material layer is disposed on the positive electrode current collector. Taking a lithium-ion battery as an example, a material of the positive electrode current collector may include aluminum, and the positive electrode active material layer may include lithium cobalt oxide, lithium iron phosphate, ternary lithium, or lithium manganate.

The negative electrode plate includes a negative electrode current collector and a negative electrode active material layer, where the negative electrode active material layer is disposed on the negative electrode current collector. A material of the negative electrode current collector may include copper, and the negative electrode active material may include carbon, silicon, or a silicon-carbon composite.

A material of the separator may include PP (polypropylene, polypropylene) or PE (polyethylene, polyethylene).

The battery cell 100 further includes a positive electrode tab and a negative electrode tab, where the positive electrode tab is connected to the positive electrode plate of the electrode assembly 10, and the negative electrode tab is connected to the negative electrode plate of the electrode assembly 10. Specifically, the positive electrode tab is connected to the positive electrode current collector of the positive electrode plate, and the negative electrode tab is connected to the negative electrode current collector of the negative electrode plate. The positive electrode tab and the positive electrode current collector may be integrally formed, for example, by die-cutting a substrate to form the positive electrode current collector and the positive electrode tab, thereby achieving integral formation of the positive electrode tab and the positive electrode current collector. The positive electrode tab and the positive electrode current collector may alternatively be separately provided and then connected together, for example, the positive electrode tab and the positive electrode current collector are connected together by welding or conductive adhesive bonding. The negative electrode tab and the negative electrode current collector may be integrally formed, for example, by die-cutting a substrate to form the negative electrode current collector and the negative electrode tab, thereby achieving integral formation of the negative electrode tab and the negative electrode current collector. The negative electrode tab and the negative electrode current collector may alternatively be separately provided and then connected together, for example, the negative electrode tab and the negative electrode current collector are connected together by welding or conductive adhesive bonding.

The electrode assembly 10 may be a laminated electrode assembly 10, where at least one positive electrode plate, at least one negative electrode plate, and at least one separator are stacked in a certain order, with the separator disposed between the positive electrode plate and the negative electrode plate to insulate and separate the positive electrode plate from the negative electrode plate, reducing the risk of short-circuiting in the battery cell 100.

The electrode assembly 10 may alternatively be a wound electrode assembly 10. The positive electrode plate, the negative electrode plate, and the separator are stacked in a certain order and wound around a winding central axis to form the wound electrode assembly 10. The separator is disposed between the positive electrode plate and the negative electrode plate to insulate and separate the positive electrode plate from the negative electrode plate.

The housing 20 may be a hard shell 21. For example, the housing 20 is a steel shell or an aluminum shell, forming a steel shell battery cell or an aluminum shell battery cell, respectively.

The housing 20 includes a shell 21 and a terminal post 22, where the accommodation space 20a is formed in the shell 21. The terminal post 22 is configured to connect to an electrode tab of the battery cell 100. As shown in FIG. 1 and FIG. 2, in some embodiments, the shell 21 may be provided with only one terminal post 22, where the terminal post 22 is insulatedly disposed on the shell 21, one of the positive electrode tab and the negative electrode tab is electrically connected to the terminal post 22, and the other of the positive electrode tab and the negative electrode tab is electrically connected to the shell 21, so that the terminal post 22 and the shell 21 respectively form a positive output terminal and a negative output terminal of the battery cell 100 for connecting to an external device. The terminal post 22 may be disposed on one sidewall of the housing 20 and protrude from the outer surface of the sidewall, facilitating electrical connection between the terminal post 22 and an external device. The terminal post 22 may be adhesively connected to the shell 21, riveted to the shell 21, or the like.

In some other embodiments, the housing 20 may include two terminal posts 22, where the two terminal posts 22 are insulatedly disposed on the shell 21, and the positive electrode tab and the negative electrode tab are respectively electrically connected to the two terminal posts 22. The two terminal posts 22 respectively form a positive output terminal and a negative output terminal of the battery cell 100, where the positive output terminal and the negative output terminal are configured to electrically connect to an external device. The two terminal posts 22 may be located on the same sidewall of the housing 20 and protrude from the sidewall, or the two terminal posts 22 may be located on different sidewalls of the housing 20.

As shown in FIG. 1 and FIG. 2, in some embodiments, the shell 21 is further provided with a pressure relief hole 211, and the housing 20 further includes a pressure relief assembly 23, where the pressure relief assembly 23 is configured to block the pressure relief hole 211 to form an independent space inside the shell 21. If the pressure relief assembly 23 opens the pressure relief hole 211, a pressure relief channel can be formed to release pressure inside the shell 21, reducing the internal pressure of the shell 21 and reducing the risk of safety hazards such as explosion or fire in the battery cell 100.

The pressure relief hole 211 and the pressure relief assembly 23 may be disposed on the same sidewall of the shell 21 as the terminal post 22, allowing the pressure relief assembly 23 to utilize the space on the sidewall with the terminal post 22 that is not occupied by the terminal post 22. When the battery cell 100 is installed in an electric device, since the terminal post 22 protrudes from the outer surface of the sidewall, there is a certain space between the outer surface of the sidewall and the electric device, and the pressure relief assembly 23 can be located in a space formed between the outer surface of the sidewall with the terminal post 22 and the electric device, fully utilizing the space. Additionally, since space needs to be reserved for the terminal post 22 to electrically connect to other components of the electric device when the battery cell 100 is installed in the electric device, the terminal post 22 and the pressure relief assembly 23 are disposed on the same sidewall, which eliminates the need to reserve additional space for the pressure relief assembly 23 to achieve pressure relief, further saving space in the electric device and making the structure of the electric device more compact.

In some embodiments, the housing 20 may be provided with an electrolyte injection hole independent of the pressure relief hole 211. An electrolyte can be injected into the interior of the shell 21 through the electrolyte injection hole, so that the electrolyte injection hole and the pressure relief hole 211 can respectively serve the functions of electrolyte injection and pressure relief.

In some other embodiments, the pressure relief hole 211 is an electrolyte injection hole, meaning that the battery cell 100 can inject an electrolyte into the interior of the shell 21 through the pressure relief hole 211. Thus, the pressure relief hole 211 can both release pressure after the adhesive layer 231 loses adhesion upon heating and be used for injecting electrolyte into the interior of the shell 21 during the assembly process of the battery cell 100, serving multiple purposes with one hole, which can simplify the structure of the housing 20, thereby simplifying the preparation process of the battery cell 100 having the housing 20 and reducing the preparation cost of the battery cell 100.

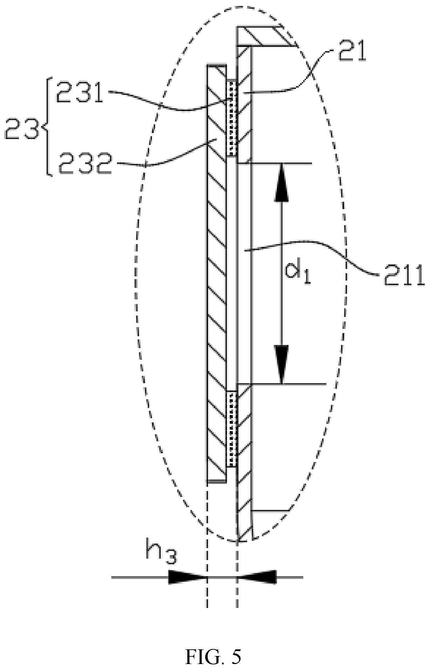

As shown in FIG. 5, in some embodiments, the pressure relief assembly 23 includes an adhesive layer 231, and the pressure relief assembly 23 is configured to open the pressure relief hole 211 when the adhesive layer 231 loses adhesion upon heating to release pressure inside the shell 21.

The pressure relief hole 211 is opened when the adhesive layer 231 of the pressure relief assembly 23 loses adhesion upon heating, so that pressure inside the housing 20 can be released, reducing the risk of safety hazards such as explosion or fire in the shell 21, thus improving the safety performance of the battery cell 100 having the housing 20. The pressure relief hole 211 is opened when the adhesive layer 231 of the pressure relief assembly 23 loses adhesion upon heating. This design gives the pressure relief assembly 23 good thermal sensitivity and high pressure relief reliability, which can improve the safety of the battery cell 100 having the housing 20. Moreover, compared to the pressure relief method using score grooves, this solution does not require reserving a large space for the pressure relief assembly 23, fully utilizing the space of the electric device, improving the space utilization rate of the electric device, making the structure of the electric device more compact, and lowering the cost of preparing the pressure relief assembly 23. The adhesive layer 231 of the pressure relief assembly 23 loses adhesion when the temperature inside the shell reaches a threshold temperature, the pressure relief hole 211 is thereby opened to release pressure inside the housing 20. This also helps increase the hot box pass rate of the battery cell 100 having the housing 20.

The shape of the pressure relief hole 211 may be various. For example, the pressure relief hole 211 is a circular hole, a rectangular hole, an elliptical hole, or the like. In an embodiment where the pressure relief hole 211 is a circular hole, a diameter of the pressure relief hole 211 is d1, 0.5 mm≤d1≤5.5 mm, which ensures that the pressure relief hole 211 has good pressure relief capability and pressure relief rate while also alleviating the issue of reduced strength of the shell 21 due to the provision of the pressure relief hole 211. For example, d1 may be 0.5 mm, 1 mm, 1.5 mm, 2 mm, 2.5 mm, 3 mm, 3.5 mm, 4 mm, 4.5 mm, 5 mm, 5.5 mm, or the like.

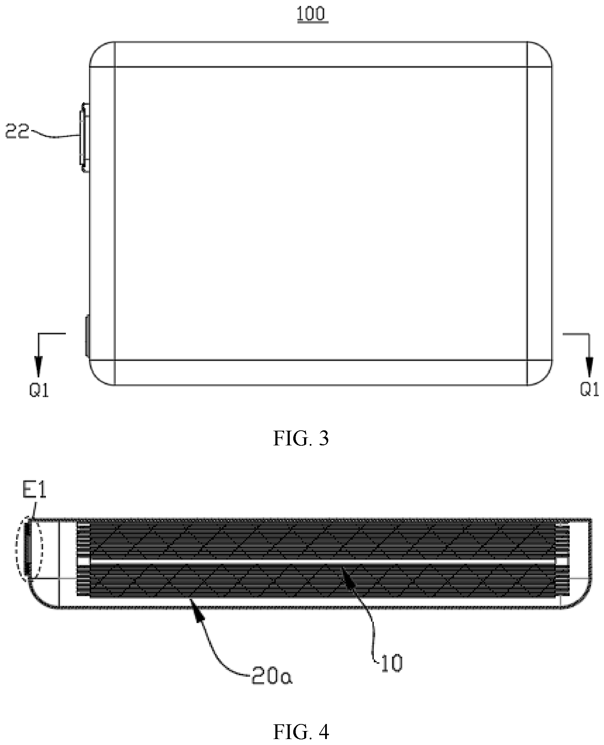

As shown in FIG. 1 to FIG. 5, the pressure relief assembly 23 further includes a diaphragm 232, where the diaphragm 232 covers the pressure relief hole 211, and an adhesive layer 231 for connecting the shell 21 is provided on a surface of the diaphragm 232 facing the shell 21.

It can be understood that the diaphragm 232 is adhered to a surface of the shell 21 via the adhesive layer 231. The adhesive layer 231 may be disposed around the periphery of the pressure relief hole 211, for example, the adhesive layer 231 may be a ring-shaped structure disposed around the periphery of the pressure relief hole 211.

When viewed along the axial direction of the pressure relief hole 211, an area of the surface of the diaphragm 232 facing the shell 21 may be equal to or different from an area of the adhesive layer 231 provided on the side of the diaphragm 232 facing the shell 21.

The diaphragm 232 covers the pressure relief hole 211, and under normal operating conditions, the likelihood of gas inside the shell 21 passing through the pressure relief hole 211 and being discharged from the shell 21 due to obstruction by the diaphragm 232 is low. In this case, the pressure relief assembly 23 may only include the diaphragm 232 and the adhesive layer 231 provided on the surface of the diaphragm 232 facing the shell 21. This design results in a simple structure of the pressure relief assembly 23, with small space occupied and low manufacturing cost.

Therefore, by covering the pressure relief hole 211 with the diaphragm 232, a sealing role can be achieved. The surface of the diaphragm 232 facing the shell 21 is provided with the adhesive layer 231, and the diaphragm 232 is adhered to the shell 21 via the adhesive layer 231, making the connection method simple and convenient. When the adhesive layer 231 loses adhesion upon the temperature inside the shell reaching the threshold temperature, the diaphragm 232 is easily separated from the shell 21, thereby 232 opening the pressure relief hole 211 to release pressure, achieving timely pressure relief, and improving the safety performance of the battery cell 100 having the housing 20. Covering the pressure relief hole 211 with the diaphragm 232 simplifies the structure of the pressure relief assembly 23 and reduces the manufacturing cost.

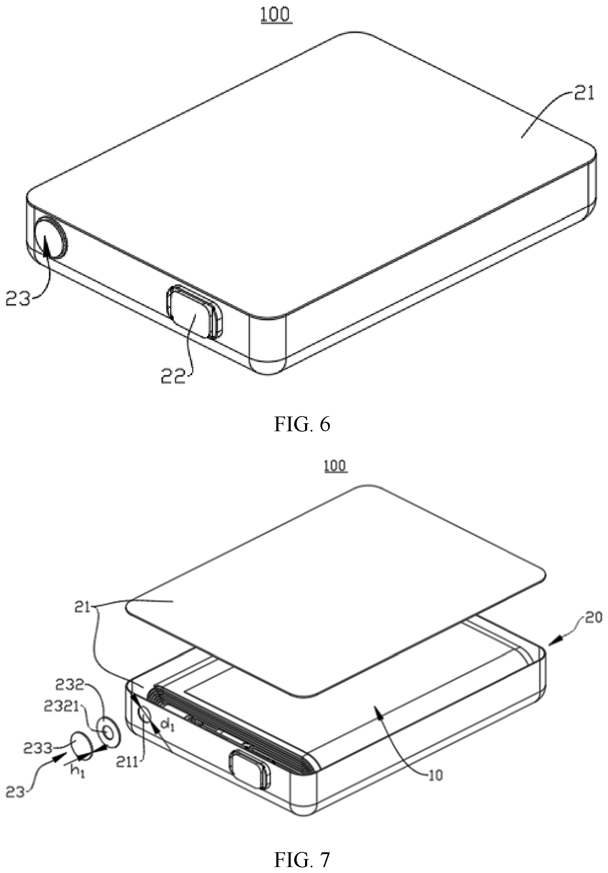

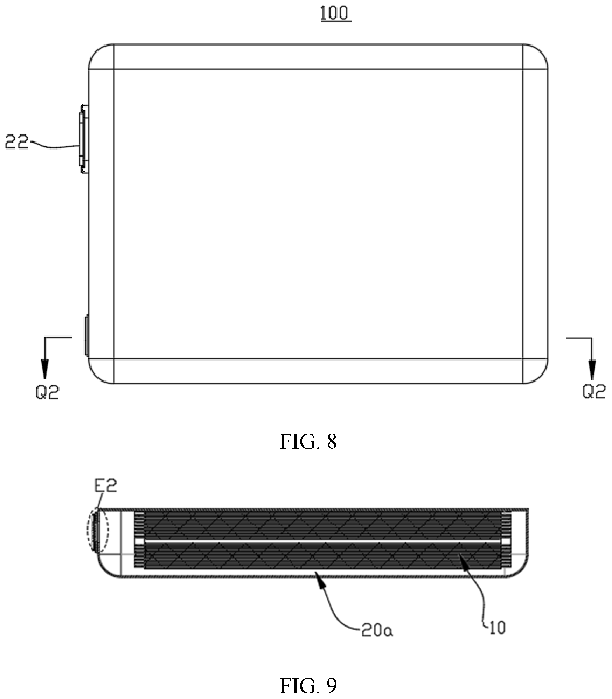

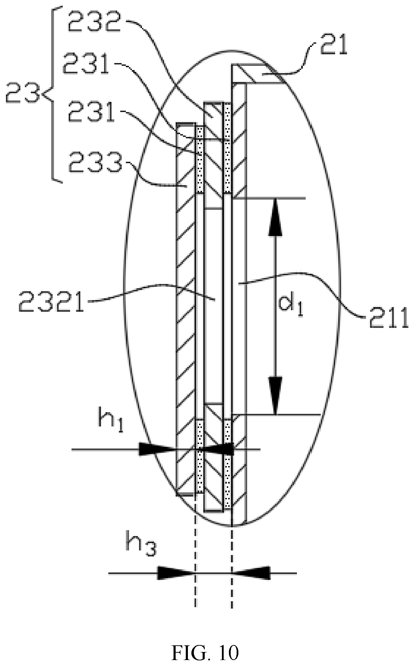

As shown in FIG. 6 to FIG. 10, in some embodiments, the pressure relief assembly 23 further includes a first metal sheet 233 and a diaphragm 232, where the diaphragm 232 is disposed between the first metal sheet 233 and the shell 21, the diaphragm 232 is connected to the shell 21, an adhesive layer 231 for connecting the first metal sheet 233 is provided on a surface of the diaphragm 232 facing away from the shell 21, and the first metal sheet 233 covers the pressure relief hole 211.

The surface of the diaphragm 232 facing the shell 21 is connected to the shell 21. In some embodiments, the surface of the diaphragm 232 facing the shell 21 is provided with an adhesive layer 231, and the diaphragm 232 is connected to the shell 21 via the adhesive layer 231, making the connection simpler and more convenient.

The surface of the diaphragm 232 facing away from the shell 21 is further provided with an adhesive layer 231, and the first metal sheet 233 is adhered to the diaphragm 232 via the adhesive layer 231 on the surface of the diaphragm 232 facing away from the shell 21. To be specific, two sides of the diaphragm 232 are each provided with an adhesive layer 231, one adhesive layer 231 is used to adhere the diaphragm 232 to the shell 21, and the other adhesive layer 231 is used to adhere the diaphragm 232 to the first metal sheet 233. During the manufacturing process of the battery cell 100, the first metal sheet 233, adhesive layer 231, diaphragm 232, and adhesive layer 231 may be sequentially stacked and distributed, and through pressure activation, the diaphragm 232 and the first metal sheet 233 are adhered via the adhesive layer 231 to form an integral unit. Under abuse conditions, for example, when the temperature of the battery cell 100 reaches 110°C to 130°C, the adhesive layer 231 in the pressure relief assembly 23 loses adhesion, causing the diaphragm 232 to detach from the first metal sheet 233, exposing the pressure relief hole 211 and forming a pressure relief channel; under normal operating conditions (for example, temperature less than or equal to 85°C), a sealing function can be achieved.

The first metal sheet 233 covers the pressure relief hole 211, and under normal operating conditions, the likelihood of gas inside the shell 21 passing through the pressure relief hole 211 and being discharged from the shell 21 due to obstruction by the first metal sheet 233 is low. The likelihood of external impurities entering the shell 21 due to obstruction by the first metal sheet 233 is low, for example, the first metal sheet 233 can reduce the water penetration of the polymer in diaphragm 232.

Therefore, the first metal sheet 233 covers the pressure relief hole 211, which contributes to improving the sealing performance of the pressure relief assembly 23 under normal operating conditions. The surface of the diaphragm 232 facing the first metal sheet 233 is provided with the adhesive layer 231, and the diaphragm 232 is adhered to the first metal sheet 233 via the adhesive layer 231, making the connection method simple. When the adhesive layer 231 loses adhesion upon heating, the first metal sheet 233 is easily separated from the diaphragm 232, thereby allowing the first metal sheet 233 to open the pressure relief hole 211 to release pressure, achieving timely pressure relief, and improving the safety performance of the battery cell 100 having the housing 20.

In an embodiment where the pressure relief assembly 23 includes the first metal sheet 233 and the diaphragm 232, the diaphragm 232 may be provided with a first through hole 2321, where the first through hole 2321 communicates with the pressure relief hole 211. A cross-sectional area of the first through hole 2321 may be greater than, less than, or equal to a cross-sectional area of the pressure relief hole 211. A shape of the first through hole 2321 may be various. For example, the first through hole 2321 may be a circular hole, a rectangular hole, an elliptical hole, or the like. FIG. 7 shows a case where the first through hole 2321 is circular. The first through hole 2321 and the pressure relief hole 211 may be coaxially arranged.

A material of the first metal sheet 233 may include aluminum, nickel, stainless steel, or the like. The material of the first metal sheet 233 is one or more of nickel, aluminum, or stainless steel. The first metal sheet 233 may include any one of nickel, aluminum, and stainless steel, for example, the material of the first metal sheet 233 is aluminum, or the material of the first metal sheet 233 is nickel, or the material of the first metal sheet 233 is stainless steel. Certainly, the material of the second metal sheet 234 may alternatively include two materials from aluminum, nickel, and stainless steel, for example, the first metal sheet 233 includes aluminum and nickel, or the first metal sheet 233 includes aluminum and stainless steel, or the first metal sheet 233 includes stainless steel and nickel. The first metal sheet 233 may alternatively include all three materials: nickel, aluminum, and stainless steel.

The shape of the first metal sheet 233 may be various. For example, the first metal sheet 233 is circular, rectangular, elliptical, or the like.

In some embodiments, a thickness of the first metal sheet 233 is h₁, 0.03 mm≤h₁≤1.00 mm.

For example, h₁ may be 0.03 mm, 0.1 mm, 0.2 mm, 0.3 mm, 0.4 mm, 0.5 mm, 0.6 mm, 0.7 mm, 0.8 mm, 0.9 mm, 1.00 mm, or the like.

The range of 0.03 mm≤h₁≤1.00 mm makes the first metal sheet 233 have good strength, which contributes to improving the sealing performance, and can also minimize the space occupied by the first metal sheet 233 as much as possible, making the structure of the battery cell 100 having the housing 20 more compact.

Further, 0.03 mm≤h₁≤0.15 mm. For example, h₁ may be 0.035 mm, 0.04 mm, 0.045 mm, 0.05 mm, 0.055 mm, 0.065 mm, 0.065 mm, 0.07 mm, 0.075 mm, 0.08 mm, 0.085 mm, 0.09 mm, 0.095 mm, 0.15 mm, or the like.

The range of 0.03 mm≤h₁≤0.15 mm makes the first metal sheet 233 have better strength, which contributes to improving the sealing performance, and can also make the space occupied by the first metal sheet 233 smaller, making the structure of the battery cell 100 having the housing 20 more compact.

In some embodiments, a thermal conductivity of the first metal sheet 233 is P₁, 10 W/(m*K) ≤P₁≤500 W/(m*K).

For example, P₁ may be 10 W/(m*K), 100 W/(m*K), 150 W/(m*K), 200 W/(m*K), 250 W/(m*K), 300 W/(m*K), 350 W/(m*K), 400 W/(m*K), 450 W/(m*K), 500 W/(m*K), or the like.

The thermal conductivity of the first metal sheet 233 is P₁, 10 W/(m*K) ≤P₁≤500 W/(m*K), which contributes to transferring heat through the first metal sheet 233 to the adhesive layer 231, so that the adhesive layer 231 between the first metal sheet 233 and the diaphragm 232 can lose adhesion promptly, reducing the risk of safety hazards such as explosion or fire in the housing 20, thus improving the safety performance of the battery cell 100 having the housing 20.

Further, 80 W/(m*K) ≤P₁≤420 W/(m*K). For example, P₁ may be 80 W/(m*K), 120 W/(m*K), 180 W/(m*K), 220 W/(m*K), 280 W/(m*K), 320 W/(m*K), 380 W/(m*K), 420 W/(m*K), or the like.

The range of 80 W/(m*K) ≤P₁≤420 W/(m*K) makes the first metal sheet 233 more sensitive to temperature, enabling more timely transfer of heat to the adhesive layer 231 between the diaphragm 232 and the first metal sheet 233, so that the adhesive layer 231 between the first metal sheet 233 and the diaphragm 232 can lose adhesion promptly, reducing the risk of safety hazards such as explosion or fire in the housing 20, thus improving the safety performance of the battery cell 100 having the housing 20.

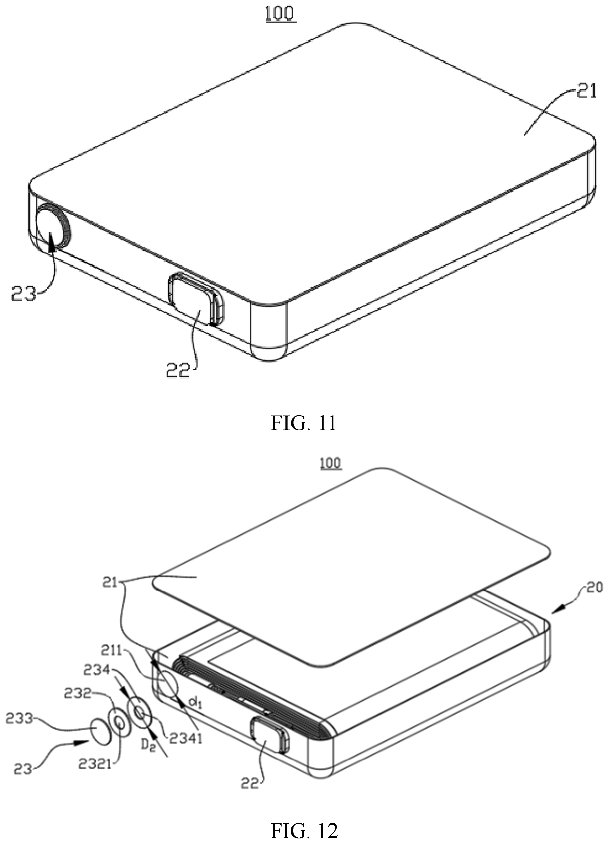

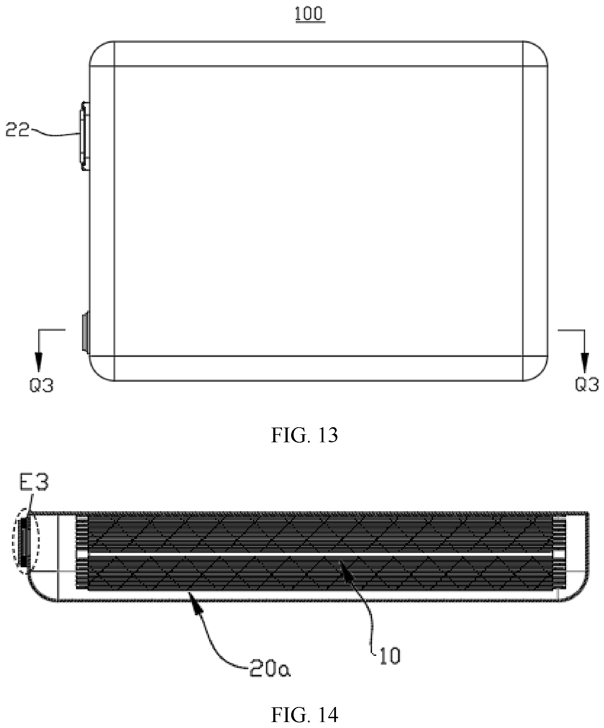

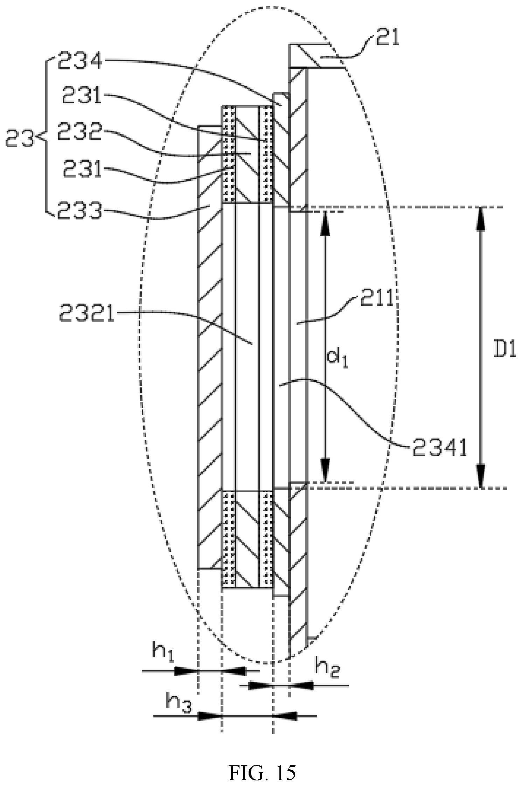

As shown in FIG. 11 to FIG. 15, in some embodiments, the pressure relief assembly 23 further includes a second metal sheet 234, where the second metal sheet 234 is provided with a second through hole 2341, the second metal sheet 234 is connected between the diaphragm 232 and the shell 21, the second through hole 2341 communicates with the pressure relief hole 211, the adhesive layer 231 for adhering to the second metal sheet 234 is provided on a surface of the diaphragm 232 facing away from the first metal sheet 233, and the second metal sheet 234 is connected to an outer surface of the housing 20.

The second metal sheet 234 is adhered via the adhesive layer 231 disposed on a side of the diaphragm 232 facing away from the first metal sheet 233, making the connection simpler and more convenient and making the metal sheet have good thermal conductivity. The provision of the second metal sheet 234 facilitates rapid transfer of heat inside the housing 20 to the adhesive layer 231 between the diaphragm 232 and the second metal sheet 234, so that the adhesive layer 231 can lose adhesion promptly, thereby making the pressure relief sensitivity of the pressure relief assembly 23 better, reducing the risk of safety hazards such as explosion or fire in the housing 20, thus improving the safety performance of the battery cell 100 having the housing 20.

Two sides of the diaphragm 232 are each provided with an adhesive layer 231, one adhesive layer 231 connects the second metal sheet 234 and the diaphragm 232, and the other adhesive layer 231 connects the first metal sheet 233 and the diaphragm 232. During the assembly process of the battery cell 100, the first metal sheet 233, the adhesive layer 231, the diaphragm 232, the adhesive layer 231, and the second metal sheet 234 are sequentially stacked and distributed. Through pressure activation, the diaphragm 232 is adhered to the first metal sheet 233 via the adhesive layer 231, and the diaphragm 232 is adhered to the second metal via the adhesive layer 231, to form an integral unit. Subsequently, the second metal sheet 234 may be connected to the shell 21 through a laser welding process, so that the pressure relief assembly 23 forms a sealing effect on the pressure relief hole 211. Under abuse conditions, for example, when the temperature of the battery cell 100 reaches 110°C to 150°C, the adhesive layer 231 in the pressure relief assembly 23 loses adhesion, causing the diaphragm 232 to detach from the first metal sheet 233 and the diaphragm 232 to detach from the second metal sheet 234, exposing the through hole of the ring-shaped piece, and forming a pressure relief channel; under normal operating conditions (for example, temperature less than or equal to 85°C), the pressure relief assembly 23 can achieve a sealing function.

A shape of the second through hole 2341 may be various. For example, the second through hole 2341 is a circular hole, a rectangular hole, an elliptical hole, or the like.

A shape of the second metal sheet 234 may be various. For example, the second metal sheet 234 is circular, rectangular, elliptical, or the like.

A material of the second metal sheet 234 includes, but is not limited to, aluminum, nickel, or stainless steel. A material of the second metal sheet 234 is one or more of nickel, aluminum, or stainless steel. The second metal sheet 234 may include any one of nickel, aluminum, and stainless steel, for example, the material of the second metal sheet 234 is aluminum, or the material of the second metal sheet 234 is nickel, or the material of the second metal sheet 234 is stainless steel. Certainly, the material of the second metal sheet 234 may alternatively include two materials from aluminum, nickel, and stainless steel, for example, the second metal sheet 234 includes aluminum and nickel, or the second metal sheet 234 includes aluminum and stainless steel, or the second metal sheet 234 includes stainless steel and nickel. The second metal sheet 234 may alternatively include all three materials: nickel, aluminum, and stainless steel.

In an embodiment where the pressure relief assembly 23 includes the first metal sheet 233, the diaphragm 232, and the second metal sheet 234, the diaphragm 232 may be provided with a first through hole 2321 or may not be provided with a first through hole 2321. Under a condition that the diaphragm 232 is provided with a first through hole 2321, a cross-sectional area of the second through hole 2341 may be greater than, less than, or equal to a cross-sectional area of the first through hole 2321. Under a condition that both the first through hole 2321 and the second through hole 2341 are circular holes, the first through hole 2321 and the second through hole 2341 may be coaxially arranged.

In some embodiments, a diameter of the second through hole 2341 is D₁, 0.1 mm≤D₁≤4 mm.

For example, D₁ may be 0.1 mm, 0.5 mm, 1 mm, 1.5 mm, 2 mm, 2.5 mm, 3 mm, 3.5 mm, 4 mm, or the like.

The range of 0.1 mm≤D₁≤4 mm ensures a larger connection area between the second metal sheet 234 and the diaphragm 232 and between the second metal sheet 234 and the shell 21, improves connection stability, and can also reduce the risk of the second metal sheet 234 blocking the pressure relief hole 211. After the adhesive layer 231 loses its adhesion, this enables the pressure relief hole 211 to release pressure in a timely and efficient manner, thus improving the safety performance of the battery cell 100 having the housing 20.

Further, 0.3 mm≤D₁≤3 mm. For example, D₁ may be 0.3 mm, 0.38 mm, 1.2 mm, 1.8 mm, 2.2 mm, 2.8 mm, 3 mm, or the like.

In some embodiments, an outer diameter of the second metal sheet 234 is D₂, 1 mm≤D₂≤6 mm. This range helps the second metal sheet 234 having a larger coverage area, facilitates the connection between the second metal sheet 234 and the shell 21. It can also make the space occupied by the second metal sheet 234 relatively reasonable, which contributes to reducing the volume of the battery cell 100. For example, D₂ may be 1 mm, 1.5 mm, 2 mm, 2.5 mm, 3 mm, 3.5 mm, 4 mm, 4.5 mm, 5 mm, 5.5 mm, 6 mm, or the like.

Further, 2 mm≤D₂≤5 mm. For example, D₂ may be 2 mm, 2.3 mm, 2.8 mm, 3.3 mm, 3.8 mm, 4.3 mm, 4.8 mm, 5 mm, or the like.

In some embodiments, an outer diameter of the second metal sheet 234 is greater than or equal to a diameter of the pressure relief hole 211, that is, D₂≥d1.

In some embodiments, the outer diameter of the first metal sheet 233 is less than the outer diameter of the second metal sheet 234, and the outer diameter of the first metal sheet 233 is greater than the diameter of the second through hole 2341.

In some embodiments, a thickness of the second metal sheet 234 is h₂, 0.03 mm≤h₂≤1 mm.

For example, h₂ may be 0.03 mm, 0.1 mm, 0.2 mm, 0.3 mm, 0.4 mm, 0.5 mm, 0.6 mm, 0.7 mm, 0.8 mm, 0.9 mm, 1 mm, or the like.

The range of 0.03 mm≤h₂≤1 mm makes the second metal sheet 234 have good strength, which contributes to improving the sealing performance, and can also minimize the space occupied by the second metal sheet 234 as much as possible, making the structure of the battery cell 100 having the housing 20 more compact.

Further, 0.05 mm≤h₂≤0.15 mm. For example, h₂ may be 0.05 mm, 0.06 mm, 0.07 mm, 0.08 mm, 0.09 mm, 0.095 mm, 0.15 mm, or the like.

In some embodiments, a thermal conductivity of the second metal sheet 234 is P₂, 10 W/(m*K) ≤P₂≤500 W/(m*K).

For example, P₂ may be 10 W/(m*K), 100 W/(m*K), 150 W/(m*K), 200 W/(m*K), 250 W/(m*K), 300 W/(m*K), 350 W/(m*K), 400 W/(m*K), 450 W/(m*K), 500 W/(m*K), or the like.

The range of 10 W/(m*K) ≤P₂≤500 W/(m*K) contributes to transferring heat inside the shell 21 through the second metal sheet 234 to the adhesive layer 231, so that the adhesive layer 231 between the second metal sheet 234 and the diaphragm 232 can lose adhesion promptly, reducing the risk of safety hazards such as explosion or fire in the housing 20, thus improving the safety performance of the battery cell 100 having the housing 20.

Further, 80 W/(m*K) ≤P₂≤420 W/(m*K). For example, P₂ may be 80 W/(m*K), 120 W/(m*K), 180 W/(m*K), 220 W/(m*K), 280 W/(m*K), 320 W/(m*K), 380 W/(m*K), 420 W/(m*K), or the like.

The range of 80 W/(m*K) ≤P₂≤420 W/(m*K) makes the second metal sheet 234 more sensitive to temperature, enabling more timely transfer of heat to the adhesive layer 231 between the diaphragm 232 and the second metal sheet 234, so that the adhesive layer 231 between the second metal sheet 234 and the diaphragm 232 can lose adhesion promptly, reducing the risk of safety hazards such as explosion or fire in the housing 20, thus improving the safety performance of the battery cell 100 having the housing 20.

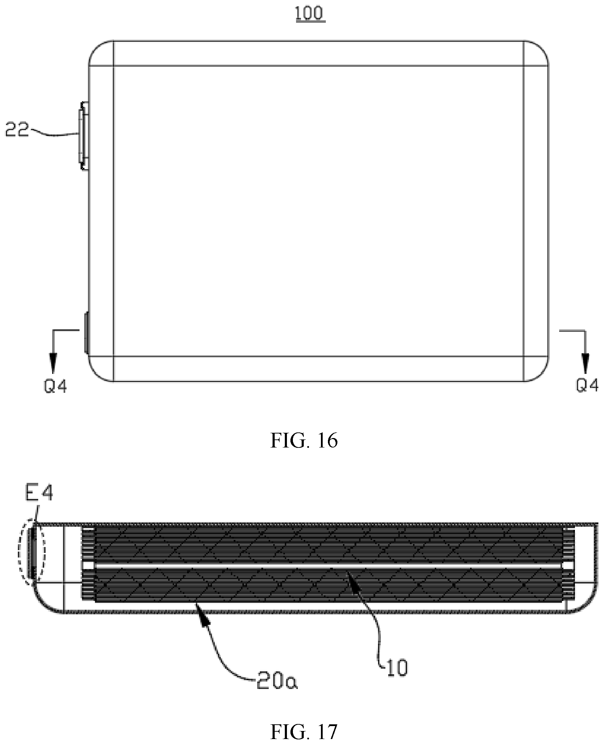

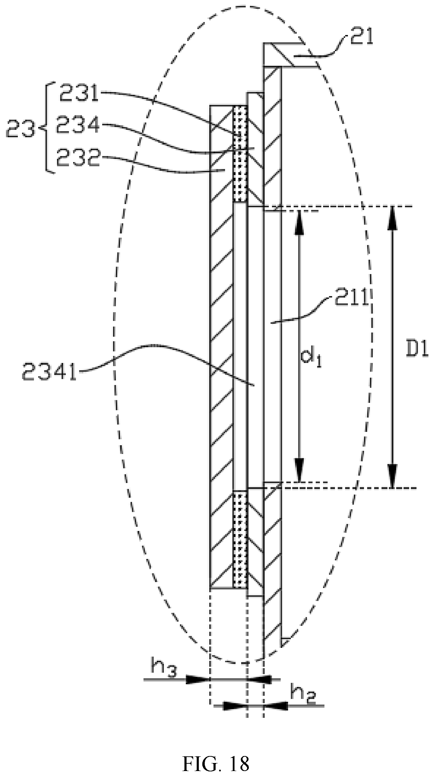

As shown in FIG. 16, FIG. 17, and FIG. 18, in some embodiments, the pressure relief assembly 23 further includes a second metal sheet 234 and a diaphragm 232, where the second metal sheet 234 is provided with a second through hole 2341, the second metal sheet 234 is disposed between the diaphragm 232 and the shell 21, the second metal sheet 234 is connected to the shell 21, the second through hole 2341 communicates with the pressure relief hole 211, the adhesive layer 231 for connecting the second metal sheet 234 is provided on a surface of the diaphragm 232 facing the shell 21, and the diaphragm 232 covers the second through hole 2341.

The surface of the diaphragm 232 facing the shell 21 is provided with an adhesive layer 231, and the diaphragm 232 is adhered to the second metal sheet 234 via the adhesive layer 231.

The diaphragm 232 is not provided with a first through hole 2321. The diaphragm 232 indirectly covers the pressure relief hole 211 by covering the second through hole 2341.

The second metal sheet 234 is connected to the shell 21, with a side of the second metal sheet 234 facing away from the shell 21 connected to the diaphragm 232 via the adhesive layer 231, making the connection simpler and more convenient. The metal sheet has good thermal conductivity, and the provision of the second metal sheet 234 facilitates rapid transfer of heat inside the housing 20 to the adhesive layer 231 between the diaphragm 232 and the second metal sheet 234, so that the adhesive layer 231 can lose adhesion promptly, thereby making the pressure relief sensitivity of the pressure relief assembly 23 better, reducing the risk of safety hazards such as explosion or fire in the housing 20, thus improving the safety performance of the battery cell 100 having the housing 20. By covering the second through hole 2341 with the diaphragm 232, a sealing role can be achieved under normal operating conditions. The surface of the diaphragm 232 facing the shell 21 is provided with the adhesive layer 231, and the diaphragm 232 is adhered to the second metal sheet 234 via the adhesive layer 231, making the connection simpler and more convenient. The good thermal conductivity of the second metal sheet 234 enables the adhesive layer 231 to lose adhesion upon heating, allowing the diaphragm 232 to easily separate from the second metal sheet 234, thereby enabling the diaphragm 232 to open the second through hole 2341, further opening the pressure relief hole 211 to release pressure, achieving timely pressure relief, and improving the safety performance of the battery cell 100 having the housing 20.

In some embodiments, a total thickness of the diaphragm 232 and the adhesive layer 231 disposed on the diaphragm 232 is h₃. In an embodiment where the adhesive layer 231 is disposed on one side of the diaphragm 232, h₃ is the sum of a thickness of the diaphragm 232 and a thickness of the adhesive layer 231 disposed on one side of the diaphragm 232. In an embodiment where the adhesive layer 231 is disposed on each of two sides of the diaphragm 232, h₃ is the sum of a thickness of the diaphragm 232 and thicknesses of the adhesive layers 231 disposed on the two sides of the diaphragm 232. In some embodiments, 0.02 mm≤h₃≤1 mm, which makes the overall space occupied by the diaphragm 232 and the adhesive layer 231 smaller, thereby reducing the volume of the pressure relief assembly 23, and facilitating miniaturization of the structure of the battery cell 100. For example, h₃ may be 0.02 mm, 0.03 mm, 0.04 mm, 0.05 mm, 0.06 mm, 0.07 mm, 0.08 mm, 0.09 mm, 1 mm, or the like.

Further, the range of 0.1 mm≤h₃≤0.3 mm makes the overall space occupied by the diaphragm 232 and the adhesive layer 231 even smaller, thereby reducing the volume of the pressure relief assembly 23, and facilitating miniaturization of the structure of the battery cell 100. For example, h₃ may be 0.1 mm, 0.13 mm, 0.15 mm, 0.17 mm, 0.25 mm, 0.27 mm, 0.3 mm, or the like.

In some embodiments, an adhesion area of the adhesive layer 231 is S, 2 mm²≤S≤10 mm². The adhesion surface S of the adhesive layer 231 refers to an adhesion area of the adhesive layer 231 on any one side of the diaphragm 232.

For example, S may be 2 mm², 3 mm², 4 mm², 5 mm², 6 mm², 7 mm², 8 mm², 9 mm², 10 mm², or the like.

When the adhesion area S of the adhesive layer 231 meets 2 mm²≤S≤10 mm², the housing 20 has good adhesion capability when in a normal operating state. This can ensure that the adhesive layer 231 keeps the pressure relief assembly 23 effectively blocking the pressure relief hole 211, thereby ensuring normal operation of the battery cell 100 having the housing 20, and can also make the adhesive layer lose adhesion promptly when the pressure and temperature inside the housing 20 are abnormal, thereby allowing the pressure relief assembly 23 to open the pressure relief hole 211 and release pressure in a timely manner, thus improving the safety performance of the battery cell 100 having the housing 20.

Further, 3 mm²≤S≤8 mm². For example, S may be 3 mm², 3.5 mm², 4.5 mm², 5.5 mm², 6.5 mm², 7.5 mm², 8 mm², or the like.

When the adhesion area S of the adhesive layer 231 meets 3 mm²≤S≤8 mm², the housing 20 has better adhesion capability when in a normal operating state. This can ensure that the adhesive layer 231 keeps the pressure relief assembly 23 effectively blocking the pressure relief hole 211, thereby ensuring normal operation of the battery cell 100 having the housing 20, and can also make the adhesive layer lose adhesion promptly when the pressure and temperature inside the housing 20 are abnormal, thereby allowing the pressure relief assembly 23 to open the pressure relief hole 211 and release pressure in a timely manner, thus improving the safety performance of the battery cell 100 having the housing 20.

The adhesive layer 231 may be arranged to avoid covering the pressure relief hole 211, that is, when viewed along the axial direction of the pressure relief hole 211, the adhesive layer 231 is located around the periphery of the pressure relief hole 211. The adhesive layer 231 does not cover a position of the diaphragm 232 corresponding to the pressure relief hole 211, which can reduce the usage of material for the adhesive layer 231 and save costs. In some embodiments, the adhesion area S of one adhesive layer 231 may be a difference between an area of one surface of the diaphragm 232 along the axial direction of the pressure relief hole 211 and the cross-sectional area of the pressure relief hole 211.

In some embodiments, the adhesive layer 231 includes a polymer, and can play a role of high adhesion performance under normal operating conditions, thereby enabling the pressure relief assembly 23 to achieve a sealing function; under high temperature operating conditions, the adhesive layer 231 can quickly lose adhesion, causing the pressure relief assembly 23 to open the pressure relief hole 211, exposing the pressure relief hole 211, forming a pressure relief channel, and achieving timely pressure relief function.

A material of the polymer may be various. For example, in some embodiments, the material of the polymer includes at least one of ethylene, propylene, vinylidene fluoride, acrylic acid, acrylate, styrene, acrylonitrile, maleic anhydride, vinyl chloride, or chloroprene.

The above materials can facilitate the adhesive layer 231 playing a role of high adhesion performance under normal operating conditions, thereby enabling the pressure relief assembly 23 to achieve a sealing function; and also facilitate the adhesive layer 231 quickly losing adhesion under high temperature operating conditions, causing the pressure relief assembly 23 to open the pressure relief hole 211, exposing the pressure relief hole 211, forming a pressure relief channel, and achieving timely pressure relief function.

The polymer may be made of any one of the above materials, or may be made of two or more of the above materials.

Certainly, the polymer may also be replaced by other materials capable of substituting the above materials.

A mass proportion of the polymer in the adhesive layer 231 may be designed according to actual needs. For example, the mass proportion of the polymer in the adhesive layer 231 is 70% to 95%, which facilitates the adhesive layer 231 playing a role of high adhesion performance under normal operating conditions, thereby enabling the pressure relief assembly 23 to achieve a sealing function; and also facilitates the adhesive layer 231 quickly losing adhesion under high temperature operating conditions, causing the pressure relief assembly 23 to open the pressure relief hole 211, exposing the pressure relief hole 211, forming a pressure relief channel, and achieving timely pressure relief function.

The adhesive layer 231 may further include some auxiliary components. For example, a mass proportion of the polymer in the adhesive layer 231 is 90%, and the adhesive layer 231 further includes auxiliary components with a mass proportion of 10%. The auxiliary components mainly include CMC (Carboxymethyl Cellulose, carboxymethyl cellulose) and polyoxyethylene ether.

An exemplary preparation method for forming the diaphragm 232 and the adhesive layer 231 as an integral unit is provided:
10 parts of ethylene, 90 parts of propylene, and a methylcyclohexane solution are taken and added to a reactor, stirred at 130°C, and after uniform mixing, N-dodecyldimethylamine, cetyltrimethylammonium bromide, and deionized water are added, and the mixture is stirred at room temperature. The above polymer, CMC-Na, polyoxyethylene ether, and deionized water are added to a stirrer to prepare a slurry with a viscosity of 40mPa.s and a solid content of 5%. The slurry is evenly applied on one side of a porous polyethylene diaphragm 232, dried in an oven to form an adhesive layer 231 on one side of the substrate. The same preparation operations are repeated on the other side. A second adhesive layer 231 is applied and dried in an oven to form an adhesive layer 231 on the other side of the substrate, so as to form adhesive layers 231 on two sides of the diaphragm 232.

In some embodiments, a melting point of the polymer is A, 70°C≤A≤100°C.

For example, A may be 70°C, 75°C, 80°C, 85°C, 90°C, 95°C, 100°C, or the like.

The range of 70°C≤A≤100°C makes the adhesive layer 231 lose adhesion before issues such as explosion or fire occur in the housing 20, thereby allowing the pressure relief assembly 23 to open the pressure relief hole 211 to release pressure inside the shell 21, reducing the risk of issues such as explosion or fire in the battery cell 100 having the housing 20, thus facilitating improvement of the safety performance of the battery cell 100.

In some embodiments, a volume distribution particle size Dv90 of the polymer is 2.5 µm to 4.5 µm.

Dv90 is the particle size corresponding to 90% of the volume distribution of the polymer particles. For example, Dv90 may be 2.5 µm, 2.8 µm, 3 µm, 3.2 µm, 3.5 µm, 3.8 µm, 4 µm, 4.2 µm, 4.5 µm, or the like.

The volume distribution particle size Dv90 of the polymer being 2.5 µm to 4.5 µm facilitates the adhesive layer 231 having good adhesion performance.

In some embodiments, the volume distribution particle size Dv50 of the polymer is 0.8 µm to 1.8 µm.

Dv50 is the particle size corresponding to 50% of the volume distribution of the polymer particles. For example, Dv50 may be 0.8 µm, 0.9 µm, 1 µm, 1.1 µm, 1.2 µm, 1.3 µm, 1.4 µm, 1.5 µm, 1.6 µm, 1.7 µm, 1.8 µm, or the like.

In some embodiments, a weight average molecular weight of the polymer is K, 15w≤K≤25w.

The weight average molecular weight is one of basic parameters of the polymer, serves as a parameter to measure the relative mass and distribution of the polymer, and is closely related to the performance and processability of polymer materials. If the relative mass is too low, the mechanical strength and toughness of the material are poor, lacking practical value. If the relative mass is too high, the melt viscosity increases, causing difficulties in processing and molding. The weight average molecular weight K of the polymer being 15w≤K≤25w facilitates the adhesive layer 231 having good adhesion performance and mechanical performance, and can also reduce the manufacturing difficulty of the adhesive layer 231.

For example, K may be 15w, 16w, 17w, 18w, 19w, 20w, 21w, 22w, 23w, 24w, 25w, or the like.

In some embodiments, an adhesion force of the adhesive layer 231 is F, 10 N/m≤F≤40 N/m.

The testing method for the adhesion force of the adhesive layer 231 may refer to related technologies, and is not further described in the present application.

The range of 10 N/m≤F≤40 N/m facilitates the adhesive layer 231 playing a role of high adhesion performance under normal operating conditions, thereby enabling the pressure relief assembly 23 to achieve a sealing function, and also facilitates the adhesive layer 231 quickly losing adhesion under high temperature operating conditions, causing the pressure relief assembly 23 to open the pressure relief hole 211, exposing the pressure relief hole 211, forming a pressure relief channel, and achieving timely pressure relief function.

For example, F may be 10 N/m, 15 N/m, 20 N/m, 25 N/m, 30 N/m, 35 N/m, 40 N/m, or the like.

It should be noted that, under a condition that an adhesive layer 231 for adhering to the shell 21 is provided on the side of the diaphragm 232 facing the shell 21, the adhesion force F of the adhesive layer 231 may be an adhesion force between the diaphragm 232 and the shell 21.

Under a condition that an adhesive layer 231 for adhering to the first metal sheet 233 is provided on the side of the diaphragm 232 facing away from the shell 21, the adhesion force F of the adhesive layer 231 may be an adhesion force between the diaphragm 232 and the first metal sheet 233.

Under a condition that an adhesive layer 231 for adhering to the second metal sheet 234 is provided on the side of the diaphragm 232 facing away from the first metal sheet 233, the adhesion force F of the adhesive layer 231 may be an adhesion force between the diaphragm 232 and the second metal sheet 234.

To verify the safety performance of the battery cell 100 according to some embodiments of the present application, taking the battery cell 100 with a pressure relief assembly 23 including a first metal sheet 233, a diaphragm 232, and a second metal sheet 234, with an adhesive layer 231 disposed on each of two sides of the diaphragm 232, as an example, the following tests were conducted on the battery cell 100:
I. Overcharge test: The battery cell 100 was tested for discharge and then placed in an explosion-proof box. A thermocouple was attached (with the thermocouple contact fixed at the center of the surface of the battery cell 100), and the battery cell was connected to a power source for charging, charged at a constant current of 3C to 4.6 V until the voltage reached the maximum value, stopped the test when either of the following conditions was met:
   (a) continuous charging time reached 7 hours; and
   (b) a temperature of the battery cell 100 dropped to 20% below the peak value.

If the battery cell 100 did not catch fire or explode, the safety of the battery cell 100 was deemed qualified.
II. Over-discharge test: After standard discharge, the battery cell 100 was placed in an explosion-proof box; an external resistor of 30 ohms was connected, and discharge continued for 7 hours, or until the voltage was less than 0.2 V. If the battery cell 100 did not leak, did not suffer from electrolyte leakage, did not catch fire, or did not explode, the safety of the battery cell 100 was deemed qualified.
III. 130°C thermal shock test I: After the battery cell 100 was fully charged according to the standard charging mode, the test was conducted within 12 to 24 hours. A convection method or a circulating hot air box was used, heating started at an initial temperature of 25±3°C, with a temperature change rate of 5±2°C/min. The temperature was raised to 130±2°C, and this temperature was maintained for 30 minutes before the test ended. If the battery cell 100 did not catch fire or explode, the safety of the battery cell 100 was deemed qualified.
IV 130°C thermal shock test II: After the battery cell 100 was fully charged according to the standard charging mode, the test was conducted within 12 to 24 hours. A convection method or a circulating hot air box was used, heating started at an initial temperature of 25±3°C, with a temperature change rate of 5±2°C/min. The temperature was raised to 130±2°C, and this temperature was maintained for 30 minutes before the test ended. If the battery cell 100 did not catch fire or explode, the safety of the battery cell 100 was deemed qualified.
V. 150°C thermal shock test: After the battery cell 100 was fully charged according to the standard charging mode, the test was conducted within 12 to 24 hours. A convection method or a circulating hot air box was used, heating started at an initial temperature of 25±3°C, with a temperature change rate of 5±2°C/min. The temperature was raised to 150±2°C, and this temperature was maintained for 30 minutes before the test ended. If the battery cell 100 did not catch fire or explode, the safety of the battery cell 100 was deemed qualified.

According to the above overcharge test method, over-discharge test method, 130°C thermal shock test I method, 130°C thermal shock test II method, and 150°C thermal shock test method, while keeping the shape, size, material, and other conditions of the diaphragm 232 of the pressure relief assembly 23 of the battery cell 100 in various examples, as well as the shape, material, adhesion area, and other conditions of the adhesive layer 231 the same, by varying the thickness h₁ of the first metal sheet 233, the thickness h₂ of the second metal sheet 234, the thermal conductivity P₁ of the first metal sheet 233, and the thermal conductivity P₂ of the second metal sheet 234, the effects of the thickness h₁ of the first metal sheet 233, the thickness h₂ of the second metal sheet 234, the thermal conductivity P₁ of the first metal sheet 233, and the thermal conductivity P₂ of the second metal sheet 234 on the overcharge pass rate, over-discharge pass rate, and hot box pass rate of the battery cell 100 were obtained, respectively. The data are shown in Table 1.

In Table 1, in Examples 1 to 7, Example 26, and Example 27, the difference in the battery cells 100 in these examples lie in the different thicknesses h₁ of the first metal sheets 233, to obtain the effect of the thickness h₁ of the first metal sheet 233 on the overcharge pass rate, over-discharge pass rate, and hot box pass rate of the battery cell 100. In Example 28, Example 29, Example 2, and Examples 8 to 11, the difference in the battery cells 100 in these examples lie in the different thicknesses h₂ of the second metal sheets 234, to obtain the effect of the thickness h₂ of the second metal sheet 234 on the overcharge pass rate, over-discharge pass rate, and hot box pass rate of the battery cell 100. In Example 30, Example 31, Example 2, and Examples 12 to 16, the difference in the battery cell 100 in these examples lie in the different thermal conductivities P₁ of the first metal sheets 233, to obtain the effect of the thermal conductivity P₁ of the first metal sheet 233 on the overcharge pass rate, over-discharge pass rate, and hot box pass rate of the battery cell 100. In Example 32, Example 33, and Examples 17 to 21, the differences in the battery cell 100 in these examples lie in the different thermal conductivities P₂ of the second metal sheets 234, to obtain the effect of the thermal conductivity P₂ of the second metal sheet 234 on the overcharge pass rate, over-discharge pass rate, and hot box pass rate of the battery cell 100. In Example 34 and Examples 22 to 25, the differences in the battery cell 100 in these examples lie in the different diameters D₁ of the second through holes 2341, to obtain the effect of the diameter D₁ of the second through hole 2341 on the overcharge pass rate, over-discharge pass rate, and hot box pass rate of the battery cell 100.

**Table 1**

| | First metal sheet | Second metal sheet | First metal sheet | Second metal sheet | | | | |
|---|---|---|---|---|---|---|---|---|
| | h₁ | h₂ | P₁ | P₂ | D₁ | Overcharge pass rate | Over-discharge pass rate | Hot box pass rate |
| Example 1 | 0.03 mm | 0.03 mm | 70 mm | 80 mm | 0.5 mm | 82% | 82% | 90% |
| Example 2 | 0.1 mm | 0.03 mm | 70 mm | 80 mm | 0.5 mm | 83% | 83% | 95% |
| Example 3 | 0.15 mm | 0.03 mm | 70 mm | 80 mm | 0.5 mm | 85% | 84% | 95% |
| Example 4 | 0.2 mm | 0.03 mm | 70 mm | 80 mm | 0.5 mm | 80% | 80% | 90% |
| Example 5 | 0.4 mm | 0.03 mm | 70 mm | 80 mm | 0.5 mm | 81% | 81% | 90% |
| Example 6 | 0.8 mm | 0.03 mm | 70 mm | 80 mm | 0.5 mm | 81% | 82% | 90% |
| Example 7 | 1 mm | 0.03 mm | 70 mm | 80 mm | 0.5 mm | 82% | 80% | 85% |
| Example 8 | 0.1 mm | 0.1 mm | 70 mm | 80 mm | 0.5 mm | 85% | 83% | 90% |
| Example 9 | 0.1 mm | 0.5 mm | 70 mm | 80 mm | 0.5 mm | 83% | 82% | 95% |
| Example 10 | 0.1 mm | 0.8 mm | 70 mm | 80 mm | 0.5 mm | 82% | 83% | 90% |
| Example 11 | 0.1 mm | 1 mm | 70 mm | 80 mm | 0.5 mm | 81% | 81% | 85% |
| Example 12 | 0.1 mm | 0.03 mm | 10 mm | 80 mm | 0.5 mm | 81% | 80% | 80% |
| Example 13 | 0.1 mm | 0.03 mm | 80 mm | 80 mm | 0.5 mm | 82% | 82% | 85% |
| Example 14 | 0.1 mm | 0.03 mm | 200 mm | 80 mm | 0.5 mm | 83% | 84% | 85% |
| Example 15 | 0.1 mm | 0.03 mm | 420 mm | 80 mm | 0.5 mm | 83% | 81% | 80% |
| Example 16 | 0.1 mm | 0.03 mm | 500 mm | 80 mm | 0.5 mm | 81% | 80% | 75% |
| Example 17 | 0.1 mm | 0.03 mm | 70 mm | 10 mm | 0.5 mm | 80% | 79% | 80% |
| Example 18 | 0.1 mm | 0.03 mm | 70 mm | 70 mm | 0.5 mm | 79% | 80% | 80% |
| Example 19 | 0.1 mm | 0.03 mm | 70 mm | 300 mm | 0.5 mm | 83% | 82% | 80% |
| Example 20 | 0.1 mm | 0.03 mm | 70 mm | 420 mm | 0.5 mm | 84% | 85% | 80% |
| Example 21 | 0.1 mm | 0.03 mm | 70 mm | 500 mm | 0.5 mm | 81% | 80% | 80% |
| Example 22 | 0.1 mm | 0.03 mm | 70 mm | 80 mm | 0.1 mm | 78% | 80% | 80% |
| Example 23 | 0.1 mm | 0.03 mm | 70 mm | 80 mm | 1 mm | 82% | 81% | 85% |
| Example 24 | 0.1 mm | 0.03 mm | 70 mm | 80 mm | 3 mm | 83% | 82% | 95% |
| Example 25 | 0.1 mm | 0.03 mm | 70 mm | 80 mm | 4 mm | 85% | 86% | 90% |
| Example 26 | 0.02 mm | 0.03 mm | 70 mm | 80 mm | 0.5 mm | 55% | 40% | 55% |
| Example 27 | 1.2 mm | 0.03 mm | 70 mm | 80 mm | 0.5 mm | 65% | 62% | 45% |
| Example 28 | 0.1 mm | 0.02 mm | 70mm | 80 mm | 0.5 mm | 67% | 63% | 65% |
| Example 29 | 0.1 mm | 1.1 mm | 70 mm | 80 mm | 0.5 mm | 57% | 60% | 35% |
| Example 30 | 0.1 mm | 0.03 mm | 8 mm | 80 mm | 0.5 mm | 75% | 78% | 55% |
| Example 31 | 0.1 mm | 0.03 mm | 510 mm | 80 mm | 0.5 mm | 70% | 72% | 70% |
| Example 32 | 0.1 mm | 0.03 mm | 70 mm | 9 mm | 0.5 mm | 46% | 50% | 45% |
| Example 33 | 0.1 mm | 0.03 mm | 70 mm | 505 mm | 0.5 mm | 73% | 72% | 70% |
| Example 34 | 0.1 mm | 0.03 mm | 70 mm | 80 mm | 5 mm | 71% | 73% | 65% |

From Table 1, it can be seen:
1. From Example 26, Example 27, and Examples 1 to 7, it can be seen that, with the thickness h₂ of the second metal sheet 234, the thermal conductivity P₁ of the first metal sheet 233, the thermal conductivity P₂ of the second metal sheet 234, and the diameter D₁ of the second through hole 2341 being constant, when the thickness h₁ of the first metal sheet 233 is 0.02 mm, the overcharge pass rate of the battery cell 100 is 55%, the over-discharge pass rate is 40%, and the hot box pass rate is 55%, all of which are low; when the thickness h₁ of the first metal sheet 233 is 1.2 mm, the overcharge pass rate of the battery cell 100 is 65%, the over-discharge pass rate is 62%, and the hot box pass rate is 45%, all of which are low. When 0.03 mm≤h₁≤1 mm, as the thickness h₁ of the first metal sheet 233 gradually increases, the overcharge pass rate, over-discharge pass rate, and hot box pass rate all show a trend of first increasing and then decreasing, and the battery cell 100 has high overcharge pass rate, over-discharge pass rate, and hot box pass rate, with the overcharge test rate, over-discharge test rate, and thermal shock test rate all being greater than or equal to 80%. Therefore, when 0.03 mm≤h₁≤1 mm, the battery cell 100 also has good overcharge pass rate, over-discharge pass rate, and hot box pass rate, and the safety and reliability of the battery cell 100 are good.
2. From Example 28, Example 29, Example 2, and Examples 8 to 11, it can be seen that, with the thickness h₁ of the first metal sheet 233, the thermal conductivity P₁ of the first metal sheet 233, the thermal conductivity P₂ of the second metal sheet 234, and the diameter D₁ of the second through hole 2341 being constant, when the thickness h₂ of the second metal sheet 234 is 0.02 mm, the overcharge pass rate of the battery cell 100 is 67%, the over-discharge pass rate is 63%, and the hot box pass rate is 65%, all of which are low; when the thickness h₂ of the second metal sheet 234 is 1.1 mm, the overcharge pass rate of the battery cell 100 is 57%, the over-discharge pass rate is 60%, and the hot box pass rate is 35%, all of which are low. When 0.03 mm≤h₂≤1 mm, as the thickness h₂ of the second metal sheet 234 gradually increases, the overcharge pass rate shows a gradually decreasing trend, the over-discharge pass rate and hot box pass rate generally show a decreasing trend, and the battery cell 100 has high overcharge pass rate, over-discharge pass rate, and hot box pass rate, with the overcharge test rate, over-discharge test rate, and thermal shock test rate all being greater than or equal to 80%, especially the hot box pass rate may exceed 90%. Therefore, when 0.03 mm≤h₂≤1 mm, the battery cell 100 also has good overcharge pass rate, over-discharge pass rate, and hot box pass rate, and the safety and reliability of the battery cell 100 are good.
3. From Example 30, Example 31, Example 2, and Examples 12 to 16, it can be seen that, with the thickness h₁ of the first metal sheet 233, the thickness h₂ of the second metal sheet 234, the thermal conductivity P₂ of the second metal sheet 234, and the diameter D₁ of the second through hole 2341 being constant, when the thermal conductivity P₁ of the first metal sheet 233 is 8 W/(m*K), the overcharge pass rate of the battery cell 100 is 75%, the over-discharge pass rate is 78%, and the hot box pass rate is 55%, all of which are low; when the thermal conductivity P₁ of the first metal sheet 233 is 510 W/(m*K), the overcharge pass rate of the battery cell 100 is 70%, the over-discharge pass rate is 72%, and the hot box pass rate is 70%, all of which are low. When 10 W/(m*K)≤P₁≤500 W/(m*K), as the thermal conductivity of the first metal sheet 233 gradually increases, the overcharge pass rate, over-discharge pass rate, and hot box pass rate show a trend of first increasing and then decreasing, and the battery cell 100 has high overcharge pass rate, over-discharge pass rate, and hot box pass rate, with the overcharge test rate, over-discharge test rate, and thermal shock test rate exceeding 75%, especially the overcharge pass rate and over-discharge pass rate both being greater than or equal to 80%. When 80 W/(m*K)≤P₁≤420 W/(m*K), the overcharge pass rate, over-discharge pass rate, and hot box pass rate are even better, all being greater than or equal to 80%. Therefore, when 10 W/(m*K)≤P₁≤500 W/(m*K), the battery cell 100 also has good overcharge pass rate, over-discharge pass rate, and hot box pass rate, and the safety and reliability of the battery cell 100 are good. When 80 W/(m*K)≤P₁≤420 W/(m*K), the overcharge pass rate, over-discharge pass rate, and hot box pass rate are even better.
4. From Example 32, Example 33, and Examples 17 to 21, it can be seen that, with the thickness h₁ of the first metal sheet 233, the thickness h₂ of the second metal sheet 234, the thermal conductivity P₁ of the first metal sheet 233, and the diameter D₁ of the second through hole 2341 being constant, when the thermal conductivity P₂ of the second metal sheet 234 is 9 W/(m*K), the overcharge pass rate of the battery cell 100 is 46%, the over-discharge pass rate is 50%, and the hot box pass rate is 45%, all of which are low; when the thermal conductivity P₂ of the second metal sheet 234 is 505 W/(m*K), the overcharge pass rate of the battery cell 100 is 73%, the over-discharge pass rate is 72%, and the hot box pass rate is 70%, all of which are low. When 10 W/(m*K)≤P₂≤500 W/(m*K), as the thermal conductivity of the second metal sheet 234 gradually increases, the overcharge pass rate, over-discharge pass rate, and hot box pass rate show a trend of first increasing and then decreasing, and the battery cell 100 has high overcharge pass rate, over-discharge pass rate, and hot box pass rate, with the overcharge test rate, over-discharge test rate, and thermal shock test rate all being greater than or equal to 79%, especially the overcharge pass rate and hot box pass rate both being greater than or equal to 80%. When 70 W/(m*K)≤P₂≤420 W/(m*K), the overcharge pass rate, over-discharge pass rate, and hot box pass rate are even better, all being greater than or equal to 79%. Therefore, when 10 W/(m*K)≤P₂≤500 W/(m*K), the battery cell 100 also has good overcharge pass rate, over-discharge pass rate, and hot box pass rate, and the safety and reliability of the battery cell 100 are good.
5. From Example 34 and Examples 22 to 25, it can be seen that, with the thickness h₁ of the first metal sheet 233, the thickness h₂ of the second metal sheet 234, the thermal conductivity P₁ of the first metal sheet 233, and the thermal conductivity P₂ of the second metal sheet 234 being constant, when the diameter D₁ of the second through hole 2341 is 5 mm, the overcharge pass rate of the battery cell 100 is 71%, the over-discharge pass rate is 73%, and the hot box pass rate is 65%, all of which are low; when 0.1 mm≤D₁≤4 mm, as the diameter of the second through hole 2341 gradually increases, the overcharge pass rate and over-discharge pass rate show a gradually increasing trend, the hot box pass rate generally shows a trend of first increasing and then decreasing, and the battery cell 100 has high overcharge pass rate, over-discharge pass rate, and hot box pass rate, with the overcharge test rate, over-discharge test rate, and thermal shock test rate all being greater than or equal to 78%, especially the over-discharge pass rate and hot box pass rate both being greater than or equal to 80%. Therefore, when 0.1 mm≤D₁≤4 mm, the battery cell 100 also has good overcharge pass rate, over-discharge pass rate, and hot box pass rate, and the safety and reliability of the battery cell 100 are good.

According to the above overcharge test method, over-discharge test method, 130°C thermal shock test I method, 130°C thermal shock test II method, and 150°C thermal shock test method, while keeping other conditions of the battery cell 100 in various examples the same, by varying the type of polymer in the adhesive layer, the mass proportion of the polymer, the melting point of the polymer, the Dv90 of the polymer, the weight average molecular weight of the polymer, the area of the adhesive layer, and the threshold temperature, the effects of the type of polymer in the adhesive layer, the mass proportion of the polymer, the melting point of the polymer, the weight average molecular weight of the polymer, the area of the adhesive layer, and the threshold temperature on the hot box pass rate and the capacity retention rate after 500 cycles at 45°C of the battery cell 100 were obtained, respectively. The data are shown in Table 2.

In Table 2, in Examples 2-1 to 2-3, the differences in the battery cells 100 in these examples lie in the different mass proportions of the polymers, to obtain the effect of the mass proportion of the polymer on the hot box pass rate and the capacity retention rate after 500 cycles at 45°C of the battery cell 100. In Example 2-21, Example 2-4, Example 2-5, Example 2-6, and Example 2-20, the differences in the battery cell 100 in these examples lie in the different melting points of the polymers, to obtain the effect of the melting point of the polymer on the hot box pass rate and the capacity retention rate after 500 cycles at 45°C of the battery cell 100. In Example 2-23, Example 2-7, Example 2-8, Example 2-9, and Example 2-22, the differences in the battery cell 100 in these examples lie in the different Dv90s of the polymers, to obtain the effect of the Dv90 of the polymer on the hot box pass rate and the capacity retention rate after 500 cycles at 45°C of the battery cell 100. In Example 2-10, Example 2-2, and Example 2-11, the differences in the battery cell 100 in these examples lie in the different weight average molecular weights of the polymers, to obtain the effect of the weight average molecular weight of the polymer on the hot box pass rate and the capacity retention rate after 500 cycles at 45°C of the battery cell 100. In Comparative Example 2-1, Comparative Example 2-2, Example 2-2, and Examples 2-12 to 2-17, the differences in the battery cell 100 in these examples lie in the different adhesion areas, to obtain the effect of the adhesion area on the hot box pass rate and the capacity retention rate after 500 cycles at 45°C of the battery cell 100. In Example 2-14, Example 2-24, Example 2-25, and Example 2-26, the differences in the battery cell 100 in these examples lie in the different types of polymers, to obtain the effect of the type of polymer on the hot box pass rate and the capacity retention rate after 500 cycles at 45°C of the battery cell 100. In Example 2-2, Examples 2-27 to 2-28, and Comparative Examples 2-3 to 2-6, the differences in the battery cell 100 in these examples lie in the different threshold temperatures, to obtain the effect of the threshold temperature on the hot box pass rate and the capacity retention rate after 500 cycles at 45°C of the battery cell 100.

**Table 2**

| | Type of polymer in adhesive layer | Mass proportion of polymer (%) | Melting point of polymer (°C) | Dv90 of polymer (µm) | Weight average molecular weight of polymer (ten thousand (w)) | Area of adhesive layer (mm²) | Threshold temperature (°C) | Hot box pass rate | Capacity retention rate after 500 cycles at 45°C |
|---|---|---|---|---|---|---|---|---|---|
| Example 2-1 | Polyacrylic acid | 70 | 80 | 3 | 20 | 3 | 110 | 10/12 | 80% |
| Example 2-2 | Polyacrylic acid | 80 | 80 | 3 | 20 | 3 | 110 | 11/12 | 82% |
| Example 2-3 | Polyacrylic acid | 95 | 80 | 3 | 20 | 3 | 110 | 10/12 | 81% |
| Example 2-4 | Polyacrylic acid | 80 | 70 | 3 | 20 | 3 | 110 | 11/12 | 81.5% |
| Example 2-5 | Polyacrylic acid | 80 | 90 | 3 | 20 | 3 | 110 | 12/12 | 81.6% |
| Example 2-6 | Polyacrylic acid | 80 | 100 | 3 | 20 | 3 | 110 | 11/12 | 81.8% |
| Example 2-7 | Polyacrylic acid | 80 | 80 | 2.5 | 20 | 3 | 110 | 11/12 | 81.5% |
| Example 2-8 | Polyacrylic acid | 80 | 80 | 4 | 20 | 3 | 110 | 11/12 | 81.6% |
| Example 2-9 | Polyacrylic acid | 80 | 80 | 4.5 | 20 | 3 | 110 | 10/12 | 81.7% |
| Example 2-10 | Polyacrylic acid | 80 | 80 | 3 | 15 | 3 | 110 | 10/12 | 80.3% |
| Example 2-11 | Polyacrylic acid | 80 | 80 | 3 | 25 | 3 | 110 | 11/12 | 81.8% |
| Example 2-12 | Polyacrylic acid | 80 | 80 | 3 | 20 | 2 | 110 | 10/12 | 80.5% |
| Example 2-13 | Polyacrylic acid | 80 | 80 | 3 | 20 | 2.5 | 110 | 11/12 | 80.8% |
| Example 2-14 | Polyacrylic acid | 80 | 80 | 3 | 20 | 6 | 110 | 11/12 | 82.5% |
| Example 2-15 | Polyacrylic acid | 80 | 80 | 3 | 20 | 8 | 110 | 12/12 | 82.3% |
| Example 2-16 | Polyacrylic acid | 80 | 80 | 3 | 20 | 9 | 110 | 11/12 | 81.4% |
| Example 2-17 | Polyacrylic acid | 80 | 80 | 3 | 20 | 10 | 110 | 10/12 | 81.6% |
| Example 2-18 | Polyacrylic acid | 100 | 80 | 5 | 30 | 3 | 110 | 8/12 | 78% |
| Example 2-19 | Polyacrylic acid | 60 | 80 | 2 | 20 | 3 | 110 | 9/12 | 77% |
| Example 2-20 | Polyacrylic acid | 80 | 110 | 3 | 20 | 3 | 110 | 8/12 | 77.5% |
| Example 2-21 | Polyacrylic acid | 80 | 60 | 3 | 20 | 3 | 110 | 9/12 | 77.85% |
| Example 2-22 | Polyacrylic acid | 80 | 80 | 5 | 20 | 3 | 110 | 9/12 | 78.5% |
| Example 2-23 | Polyacrylic acid | 80 | 80 | 2 | 20 | 3 | 110 | 8/12 | 77.1% |
| Example 2-24 | Polypropylene | 80 | 80 | 3 | 20 | 6 | 110 | 10/12 | 80.2% |
| Example 2-25 | Polyethylene | 80 | 80 | 3 | 20 | 6 | 110 | 10/12 | 80.5% |
| Example 2-26 | Polyvinylidene fluoride | 80 | 80 | 3 | 20 | 6 | 110 | 10/12 | 80.8% |
| Example 2-27 | Polyacrylic acid | 80 | 80 | 3 | 20 | 3 | 120 | 12/12 | 82.3% |
| Example 2-28 | Polyacrylic acid | 80 | 80 | 3 | 20 | 3 | 130 | 12/12 | 82.5% |
| Comparative Example 2-1 | Polyacrylic acid | 80 | 80 | 3 | 20 | 1 | 110 | 5/12 | 71% |
| Comparative Example 2-2 | Polyacrylic acid | 80 | 80 | 3 | 20 | 11 | 110 | 7/12 | 74.3% |
| Comparative Example 2-3 | Polyacrylic acid | 80 | 80 | 3 | 20 | 3 | 140 | 8/12 | 76.8% |
| Comparative Example 2-4 | Polyacrylic acid | 80 | 80 | 3 | 20 | 3 | 105 | 8/12 | 77.5% |
| Comparative Example 2-5 | Polyacrylic acid | 80 | 80 | 3 | 20 | 3 | 100 | 8/12 | 75.3% |
| Comparative Example 2-6 | Polyacrylic acid | 80 | 80 | 3 | 20 | 3 | 150 | 7/12 | 76.3% |

From Table 2, it can be seen:
1. From Examples 2-1 to 2-3, it can be seen that, when the type of the polymer in the adhesive layer 231, the melting point of the polymer, the Dv90 of the polymer, the weight average molecular weight of the polymer, and the adhesion area are the same, when the mass proportion of the polymer is 70%, the hot box pass rate of the battery cell 100 is 10/12, and the capacity retention rate after 500 cycles at 45°C is 80%; when the mass proportion of the polymer is 80%, the hot box pass rate of the battery cell 100 is 11/12, and the capacity retention rate after 500 cycles at 45°C is 82%; when the mass proportion of the polymer is 95%, the hot box pass rate of the battery cell 100 is 10/12, and the capacity retention rate after 500 cycles at 45°C is 81%. As the mass proportion of the polymer increases, both the hot box pass rate and the capacity retention rate after 500 cycles at 45°C of the battery cell show a trend of first increasing and then decreasing, with the hot box pass rate being greater than or equal to 10/12, and the capacity retention rate after 500 cycles at 45°C exceeding 80%. Therefore, when the mass proportion of the polymer in the adhesive layer 231 is 70% to 95%, the battery cell 100 has high hot box pass rate and capacity retention rate.
2. From Example 2-21, Example 2-4, Example 2-5, Example 2-6, and Example 2-20, it can be seen that, when the type of the polymer in the adhesive layer 231, the mass proportion of the polymer, the Dv90 of the polymer, the weight average molecular weight of the polymer, and the adhesion area are the same, when the melting point of the polymer is 60°C, the hot box pass rate of the battery cell 100 is 9/12, and the capacity retention rate after 500 cycles at 45°C is 77.85%; when the melting point of the polymer is 70°C, the hot box pass rate of the battery cell 100 is 11/12, and the capacity retention rate after 500 cycles at 45°C is 81.5%; when the melting point of the polymer is 90°C, the hot box pass rate of the battery cell 100 is 12/12, and the capacity retention rate after 500 cycles at 45°C is 81.6%; when the melting point of the polymer is 100°C, the hot box pass rate of the battery cell 100 is 11/12, and the capacity retention rate after 500 cycles at 45°C is 81.8%; when the melting point of the polymer is 110°C, the hot box pass rate of the battery cell 100 is 8/12, and the capacity retention rate after 500 cycles at 45°C is 77.5%. As the melting point of the polymer increases, the hot box pass rate of the battery cell shows a trend of first increasing and then decreasing, with the hot box pass rate being high and greater than or equal to 8/12, and the capacity retention rate after 500 cycles at 45°C gradually increasing, with the capacity retention rate after 500 cycles at 45°C being high and exceeding 77%. Especially when the melting point of the polymer is 70°C, 90°C, or 100°C, the hot box pass rate is greater than or equal to 11/12, and the capacity retention rate after 500 cycles at 45°C exceeds 81%. Therefore, when the melting point of the polymer in the adhesive layer 231 is 70°C to 100°C, the battery cell 100 has high hot box pass rate and capacity retention rate.
3. From Example 2-23, Example 2-7, Example 2-8, Example 2-9, and Example 2-22, it can be seen that, when the type of the polymer in the adhesive layer 231, the mass proportion of the polymer, the melting point of the polymer, the weight average molecular weight of the polymer, and the adhesion area are the same, when the Dv90 of the polymer is 2 µm, the hot box pass rate of the battery cell 100 is 8/12, and the capacity retention rate after 500 cycles at 45°C is 77.1%; when the Dv90 of the polymer is 2.5 µm, the hot box pass rate of the battery cell 100 is 11/12, and the capacity retention rate after 500 cycles at 45°C is 81.5%; when the Dv90 of the polymer is 4 µm, the hot box pass rate of the battery cell 100 is 11/12, and the capacity retention rate after 500 cycles at 45°C is 81.6%; when the Dv90 of the polymer is 4.5 µm, the hot box pass rate of the battery cell 100 is 10/12, and the capacity retention rate after 500 cycles at 45°C is 81.7%; when the Dv90 of the polymer is 5 µm, the hot box pass rate of the battery cell 100 is 9/12, and the capacity retention rate after 500 cycles at 45°C is 78.5%. As the Dv90 of the polymer increases, the hot box pass rate of the battery cell generally shows a trend of first increasing and then decreasing, with the hot box pass rate being high and greater than or equal to 8/12, and the capacity retention rate after 500 cycles at 45°C showing a trend of first increasing and then decreasing, with the capacity retention rate after 500 cycles at 45°C being high and exceeding 77%. Especially when the Dv90 of the polymer is 2.5 µm, 4 µm, or 4.5 µm, the hot box pass rate exceeds 10/12, and the capacity retention rate after 500 cycles at 45°C exceeds 81%. Therefore, when the Dv90 of the polymer in the adhesive layer 231 is 2.5 µm to 4.5 µm, the battery cell 100 has better hot box pass rate and capacity retention rate.
4. From Examples 2-10, Example 2-2, and Example 2-11, it can be seen that when the types of polymers in the adhesive layers 231 are the same, the mass proportions of the polymers are the same, the melting points of the polymers are the same, the Dv90s of the polymers are the same, and the adhesion areas are the same, when the weight average molecular weight of the polymer is 15w, the hot box pass rate of the battery cell 100 is 10/12, and the capacity retention rate after 500 cycles at 45°C is 80.3%; when the weight average molecular weight of the polymer is 20w, the hot box pass rate of the battery cell 100 is 11/12, and the capacity retention rate after 500 cycles at 45°C is 82%; when the weight average molecular weight of the polymer is 25w, the hot box pass rate of the battery cell 100 is 11/12, and the capacity retention rate after 500 cycles at 45°C is 81.8%. As the weight average molecular weight of the polymer increases, the hot box pass rate of the battery cell overall shows an increasing trend, the hot box pass rates are all greater than or equal to 10/12, the capacity retention rate after 500 cycles at 45°C first increases and then decreases, and the capacity retention rates after 500 cycles at 45°C all exceed 80%. Therefore, when the weight average molecular weight of the polymer in the adhesive layer 231 is 15w to 25w, the hot box pass rate and capacity retention rate of the battery cell 100 are both high.
5. From Comparative Example 2-1, Comparative Example 2-2, Example 2-2, Example 2-12 to Example 2-17, it can be seen that when the types of polymers in the adhesive layers 231 are the same, the mass proportions of the polymers are the same, the melting points of the polymers are the same, the Dv90s of the polymers are the same, and the weight average molecular weights of the polymers are the same, when the adhesion area is 1 mm², the hot box pass rate of the battery cell 100 is 5/12, and the capacity retention rate after 500 cycles at 45°C is 71%; when the adhesion area is 2 mm², the hot box pass rate of the battery cell 100 is 10/12, and the capacity retention rate after 500 cycles at 45°C is 80.5%; when the adhesion area is 2.5 mm², the hot box pass rate of the battery cell 100 is 11/12, and the capacity retention rate after 500 cycles at 45°C is 80.8%; when the adhesion area is 3 mm², the hot box pass rate of the battery cell 100 is 11/12, and the capacity retention rate after 500 cycles at 45°C is 82%; when the adhesion area is 6 mm², the hot box pass rate of the battery cell 100 is 11/12, and the capacity retention rate after 500 cycles at 45°C is 82.5%; when the adhesion area is 8 mm², the hot box pass rate of the battery cell 100 is 12/12, and the capacity retention rate after 500 cycles at 45°C is 82.3%; when the adhesion area is 9 mm², the hot box pass rate of the battery cell 100 is 11/12, and the capacity retention rate after 500 cycles at 45°C is 81.4%; when the adhesion area is 10 mm², the hot box pass rate of the battery cell 100 is 10/12, and the capacity retention rate after 500 cycles at 45°C is 81.6%; when the adhesion area is 11 mm², the hot box pass rate of the battery cell 100 is 7/12, and the capacity retention rate after 500 cycles at 45°C is 74.3%. As the adhesion area increases, the hot box pass rate of the battery cell overall shows a trend of first increasing and then decreasing, and the capacity retention rate after 500 cycles at 45°C overall shows a trend of first increasing and then decreasing. When the adhesion areas are 2 mm², 2.5 mm², 3 mm², 6 mm², 8 mm², 9 mm², and 10 mm², the hot box pass rates are all greater than or equal to 10/12, and the capacity retention rates after 500 cycles at 45°C all exceed 80%. Therefore, when the adhesion area is 2 mm² to 10 mm², the hot box pass rate and capacity retention rate of the battery cell 100 are both high. Especially when the adhesion areas are 3 mm², 6 mm², and 8 mm², the hot box pass rates of the battery cell 100 are 11/12, 11/12, and 12/12 respectively, and the capacity retention rates after 500 cycles at 45°C of the battery cell 100 are 82%, 82.5%, and 82.3% respectively, all exceeding 82%. Therefore, when the adhesion area is 3 mm² to 8 mm², the battery cell 100 has better hot box pass rate and capacity retention rate.
6. From Example 2-14, Example 2-24, Example 2-25, and Example 2-26, it can be seen that when the mass proportions of the polymers are the same, the melting points of the polymers are the same, the Dv90s of the polymers are the same, the weight average molecular weights of the polymers are the same, and the areas of the adhesive layers are the same, when the types of the polymers are polyacrylic acid, polypropylene, polyethylene, and polyvinylidene fluoride respectively, the battery cell 100 has a hot box pass rate greater than or equal to 10/12 and a capacity retention rate exceeding 80%, and the hot box pass rate and capacity retention rate are both high, especially when the type of the polymer is polyacrylic acid, the hot box pass rate of the battery cell 100 is 11/12, and the capacity retention rate is 82.5%. Therefore, when the mass proportions of the polymers are the same, the melting points of the polymers are the same, the Dv90s of the polymers are the same, the weight average molecular weights of the polymers are the same, and the areas of the adhesive layers are the same, when the polymer is polyacrylic acid, the battery cell 100 has better capacity retention rate and hot box pass rate.
7. From Example 2-2, Example 2-27 to Example 2-28, Comparative Example 2-3 to 2-6, it can be seen that when the set threshold temperature meets the protection scope of the present application, pressure relief will not occur at an excessively low or excessively high temperature, thus enabling the battery cell 100 to have better capacity retention rate and hot box pass rate.

An embodiment of the present application further provides an electric device, where the electric device includes the battery cell 100 provided in any of the above embodiments.

The above battery cell 100 has good safety performance, which can improve the power consumption safety and power consumption stability of the electric device powered by the battery cell 100. The battery cell 100 in the above embodiments does not require reserving a large space for the pressure relief assembly 23, enabling full utilization of the space of the electric device, improving the space utilization rate of the electric device, and making the structure of the electric device more compact.

The above are merely preferred embodiments of the present application and are not intended to limit the present application. For those skilled in the art, various changes and modifications can be made to the present application. Any modifications, equivalent replacements, improvements, and the like made within the spirit and principles of the present application should be included within the protection scope of the present application.

## Claims

1. A housing, comprising:
a shell having a pressure relief hole; and
a pressure relief assembly, blocking the pressure relief hole, the pressure relief assembly comprising an adhesive layer, wherein the adhesive layer is adhered to the shell, the adhesive layer is configured to lose adhesion when a temperature inside the shell reaches a threshold temperature, so as to open the pressure relief hole to release pressure inside the shell; and the threshold temperature is between 110° and 130°; and
an adhesion area of the adhesive layer is S, 2 mm²≤S≤10 mm².

2. The housing according to claim 1, wherein 3 mm²≤S≤8 mm².

3. The housing according to claim 1, wherein the adhesive layer comprises a polymer.

4. The housing according to claim 3, wherein a material of the polymer comprises at least one of ethylene, propylene, vinylidene fluoride, acrylic acid, acrylate, styrene, acrylonitrile, maleic anhydride, vinyl chloride, or chloroprene.

5. The housing according to claim 3, wherein based on a total mass of the adhesive layer, a mass proportion of the polymer is 70% to 95%.

6. The housing according to claim 3, wherein a melting point of the polymer is A, 70°C≤A≤100°C.

7. The housing according to claim 3, wherein a volume distribution particle size Dv90 of the polymer is 2.5 µm to 4.5 µm; and/or a weight average molecular weight of the polymer is K, 150000≤K≤250000.

8. The housing according to claim 1, wherein an adhesion force of the adhesive layer is F, 10 N/m≤F≤40 N/m.

9. The housing according to claim 1, wherein the pressure relief assembly further comprises a diaphragm, wherein the diaphragm covers the pressure relief hole, and the adhesive layer is disposed on a surface of the diaphragm facing the shell.

10. The housing according to claim 1, wherein the pressure relief assembly further comprises a first metal sheet and a diaphragm; wherein
the diaphragm is disposed between the first metal sheet and the shell, the diaphragm is connected to the shell via the adhesive layer, an adhesive layer for connecting the first metal sheet is provided on a surface of the diaphragm facing away from the shell, and the first metal sheet covers the pressure relief hole.

11. The housing according to claim 10, wherein a thickness of the first metal sheet is h₁, 0.03 mm≤h₁≤1.00 mm.

12. The housing according to claim 11, wherein 0.03 mm≤h₁≤0.15 mm.

13. The housing according to claim 11, wherein a thermal conductivity of the first metal sheet is P₁, 10 W/(m*K) ≤P₁≤500 W/(m*K).

14. The housing according to claim 13, wherein 80 W/(m*K)≤P₁≤420 W/(m*K).

15. The housing according to claim 10, wherein the pressure relief assembly further comprises a second metal sheet, wherein the second metal sheet is provided with a second through hole; and
the second metal sheet is connected between the diaphragm and the shell, the second through hole communicates with the pressure relief hole, the adhesive layer for adhering to the second metal sheet is provided on a surface of the diaphragm facing away from the first metal sheet, and the second metal sheet is connected to an outer surface of the housing.

16. The housing according to claim 15, wherein the diaphragm is provided with a first through hole, wherein the first through hole communicates with the pressure relief hole.

17. The housing according to claim 1, wherein the pressure relief assembly further comprises a second metal sheet and a diaphragm, wherein the second metal sheet is provided with a second through hole; and
the second metal sheet is disposed between the diaphragm and the shell, the second metal sheet is connected to the shell, the second through hole communicates with the pressure relief hole, the adhesive layer for connecting the second metal sheet is provided on a surface of the diaphragm facing the shell, and the diaphragm covers the second through hole.

18. The housing according to claim 15 or 17, wherein a thermal conductivity of the second metal sheet is P₂, 10 W/(m*K) ≤P₂≤500 W/(m*K).

19. The housing according to claim 18, wherein 80 W/(m*K) ≤P₂≤420 W/(m*K).

20. The housing according to claim 15 or 17, wherein the housing meets at least one of the following conditions:
Condition A: a thickness of the second metal sheet is h₂, 0.03 mm≤h₂≤1 mm; or
Condition B: a diameter of the second through hole is D₁, 0.1 mm≤D₁≤4 mm.

21. The housing according to claim 1, wherein the pressure relief hole is an electrolyte injection hole.

22. The housing according to claim 10, wherein a material of the first metal sheet is one or more of nickel, aluminum, or stainless steel.

23. The housing according to claim 17, wherein a material of the second metal sheet is one or more of nickel, aluminum, or stainless steel.

24. A battery cell, comprising:
the housing according to any one of claims 1 to 23; and
an electrode assembly located inside the housing.

25. An electric device, comprising the battery cell according to claim 24.
